# EUROPÄISCHE PATENTANMELDUNG

(11) **EP 3 786 086 A1**
(43) Veröffentlichungstag der Anmeldung: **03.03.2021**
(21) Anmeldenummer: 20194959.1
(22) Anmeldetag: 19.08.2015
(51) Int. Cl.: B65G 1/04, B65G 1/06, B66F 9/06, B66F 9/07, B66F 9/075

(54) **LAGER- UND/ODER KOMMISSIONIERSYSTEME**

(30) Priorität: 19.08.2014 DE 102014012254
(62) Teilanmeldung aus: 15766056.4
(71) Anmelder: Schütz, Harald, 9020 Klagenfurt am Wörthersee (AT); Amminger, Lisa-Marie, 8075 Hart bei Graz (AT)
(72) Erfinder: Schütz, Harald, 9020 Klagenfurt am Wörthersee (AT); Amminger, Lisa-Marie, 8075 Hart bei Graz (AT)
(74) Vertreter: Vossius & Partner Patentanwälte Rechtsanwälte mbB

(57) **Zusammenfassung**

Die vorliegende Erfindung betrifft ein Lager- und/oder Kommissioniersystem zum Lagern und/oder Kommissionieren von Gütern und weist ein Regalsystem mit Regalreihen auf, die durch Längsgassen voneinander beabstandet und mittels mindestens einer Quergasse miteinander verbunden sind. Ferner sind mindestens ein Shuttle, das ausgebildet ist, sowohl in den Längs- als auch in den Quergassen des Regalsystems zu verfahren, und mindestens zwei Lastaufnahmefahrzeug vorgesehen, die gleichzeitig auf dem Shuttle aufnehmbar sind. Ein erfindungsgemäßes Shuttle für ein Regalsystem hat eine Rahmen, eine Fahrgestell und einen Aufnahmebereich, wobei das Shuttle ausgebildet ist, sowohl in Längs- als auch in Quergassen des Regalsystems zu verfahren, und wobei der Aufnahmebereich mindestens zwei Lastaufnahmefahrzeuge gleichzeitig aufnehmen kann. Ein erfindungsgemäßes Lastaufnahmefahrzeug zur Mitführung auf einem Shuttle eines Regalsystems und zum Verfahren in dem Regalsystem weist einen länglich ausgebildeten Rahmen mit einem daran angeordneten Fahrgestell und einer Antriebseinrichtung zum Verfahren des Lastaufnahmefahrzeugs in Längsrichtung, mindestens einen auf dem Rahmen angeordneten Lastaufnahmeabschnitt zur Aufnahme eines Ladehilfsmittels und/oder einer Ladung und mindestens eine Hubeinrichtung zum Anheben und Absenken des Lastaufnahmeabschnitts auf, wobei das Lastaufnahmefahrzeug länglich ausgebildet und mindestens doppelt so lang wie breit ist.

## Beschreibung

### Gebiet der Erfindung

Die vorliegende Erfindung betrifft allgemein Lager- und/oder Kommissioniersysteme zur Lagerung, Kommissionierung und Sortierung von Gütern unterschiedlicher Art unabhängig von der Art der verwendeten Ladehilfsmittel (Paletten, Tablare, Halbpaletten, Behälter, Einzelgebinde, etc.).

### Stand der Technik

Es sind Lagersysteme bekannt, bei denen in Regalgassen verfahrbare Fahrzeuge zum Einsatz kommen. Neuerdings sind Regalsystem zum Einsatz gebracht worden, bei denen Regalgassen in Längs- und Querrichtung angeordnet sind und in denen lenkbare bzw. längs und quer verfahrbare sogenannte Shuttle-Fahrzeuge durch die Gassen gesteuert werden können. Ein derartiges System ist grundsätzlich in der WO 2005/118436 A1 beschrieben.

Es ist ferner ein Lagersystem bekannt, bei dem Shuttle-Fahrzeuge eingesetzt werden, die eine Steuerung aufweisen, die zwar von einer zentralen Einheit einen Auftrag empfängt, z.B. einen bestimmten Behälter aus einem Regal zu holen oder ihn abzustellen, das Shuttle-Fahrzeug wird aber autonom gesteuert. Dazu sind in der Steuerung der Shuttle-Fahrzeuge unter anderem Verkehrsregeln hinterlegt, durch die gewährleistet wird, dass die in einem derartigen Lagersystem eingesetzten Shuttle-Fahrzeuge nicht miteinander kollidieren.

Derartige Shuttle-Fahrzeuge sind nur zur Aufnahme vorbestimmter Lastaufnahmemittel ausgelegt. Shuttle-Fahrzeuge für Behälter oder Paletten verwenden üblicher Weise Lastaufnahmemittel, die nach unterschiedlichen Methoden arbeiten und das Ladegut entweder mit einer Gabel vom Regal hochheben, mit einem Teleskoparm umschließen und durch Schieben an der Ladegutrückseite auf das Shuttle-Fahrzeug bringen oder durch saugen oder eingreifen mit einem Mitnehmer in geeignete Ladegut- oder Behältergeometrien die notwendige Zugkraft aufbringen, um das Ladegut auf das Shuttle-Fahrzeug zu ziehen.

Diese Technologien haben den Nachteil, dass diese Vorrichtungen immer nur die direkt benachbarten Regalplätze auf Grund der begrenzten Reichweite dieser Aufnahmevorrichtungen bedienen können und gleichzeitig speziell bei hebenden Mechanismen oftmals ein Dreh- bzw. Kippmoment auf das Shuttle-Fahrzeug selbst ausgeübt wird, was wiederum entweder eine spezielle Führung des Shuttle-Fahrzeugs erfordert oder sehr schwere Shuttle-Fahrzeuge, die auf Grund des hohen Eigengewichtes auch bei auskragenden Lasten nicht kippen.

### Gegenstand der Erfindung

Der vorliegenden Erfindung liegt die Aufgabe zugrunde, diese Probleme des Standes der Technik auszuräumen und insbesondere ein verbessertes Lager- und/oder Kommissioniersystem zum Lagern und/oder Kommissionieren von Gütern, ein verbessertes Shuttle für ein Regalsystem und ein Lastaufnahmemittel bzw. ein neuartiges Lastaufnahmefahrzeug zur Mitführung auf einem Shuttle eines Regalsystems zur Verfügung zu stellen, um einerseits eine effizientere Lagerhaltung und/oder Kommisionierung zu ermöglichen und andererseits einen Mischbetrieb von Paletten und Einzelgebinden mit und ohne zusätzlichem Ladehilfsmittel (Tablare, Behälter, usw.) in einem einzigen Lagersystem zu realisieren. Diese Aufgabe wird mit den Merkmalen der unabhängigen Ansprüche gelöst. Vorteilhafte Ausführungsformen sind in den abhängigen Ansprüchen definiert.

Ein erfindungsgemäßes Lager- und/oder Kommissioniersystem zum Lagern und/oder Kommissionieren von Gütern weist ein Regalsystem mit Regalreihen auf, die durch Längsgassen voneinander beabstandet und mittels mindestens einer Quergasse miteinander verbunden sind. Ferner sind mindestens ein Shuttle, das ausgebildet ist, sowohl in den Längsals auch in den Quergassen des Regalsystems zu verfahren, und mindestens zwei Lastaufnahmefahrzeuge vorgesehen, die gleichzeitig auf dem Shuttle aufnehmbar sind.

Das Regalsystem kann einfach tief oder mehrfach tief ausgebildet sein. Es ist also n-fach tief, wobei n gleich oder größer 1 und kleiner 50, vorzugsweise kleiner 15 ist.

Orthogonal durch die Regalreihen sind vorzugsweise Lagerkanäle vorgesehen. Die Lagerkanäle sind durch Kanalprofile gebildet und erstrecken sich von einer Längsgasse zu einer unmittelbar benachbarten Längsgasse quer durch die Regalreihe. Jeder Lagerkanal hat eine Breite entsprechend der Breite eines Stellplatzes. Eine solche Stellplatzbreite wird üblicherweise durch Palettenmaße definiert und kann beispielsweise durch die kurz oder lange Seite einer Europalette festgelegt werden. Beispielsweise liegt eine Stellplatzbreite bzw. die Breite des Lagerkanals im Bereich zwischen 0,4 m und 1,5 m. Pro Stellplatzbreite sind vorzugsweise mindestens zwei parallel verlaufende Kanalprofile für jeweils mindestens ein Lastaufnahmefahrzeug vorgesehen. Es können beispielsweise bis zu zwölf parallel verlaufende Kanalprofile für jeweils mindestens ein Lastaufnahmefahrzeug vorgesehen sein.

Die Kanalprofile sind bevorzugt als Fahrspur für die Lastaufnahmefahrzeuge und gleichzeitig zum Halten bzw. Abstellen des Lagerguts ausgebildet. Ferner ist es vorteilhaft, insbesondere für die Lagerung von Paletten, die Kanalprofile derart voneinander beabstandet anzuordnen, dass sie in die nach unten offenen Gabelfreiräume einer Palette passen.

Das erfindungsgemäßes Lager- und/oder Kommissioniersystem verfügt bevorzugt über zumindest ein Shuttle mit einem Rahmen, einem Fahrgestell und einem Aufnahmebereich, wobei der Aufnahmebereich mindestens zwei Lastaufnahmefahrzeuge gleichzeitig aufnehmen kann.

Der Aufnahmebereich des Shuttles weist bevorzugt mehrere parallel zueinander ausgerichtete Profilschienen auf, wobei in jeder der Profilschienen mindestens ein Lastaufnahmefahrzeug aufnehmbar ist. Beispielswise sind zumindest zwei der Profilschienen derart voneinander beabstandet, dass sie in die nach unten offenen Gabelfreiräume einer Palette passen.

Im Aufnahmebereich des Shuttles kann mindestens eine Einrichtung zum Fördern von Ladehilfsmitteln und/oder Ladung vorgesehen sein. Insbesondere kann dies in Form von Rad-, Rollen-, Riemen- und/oder Kettenförderern realisiert werden.

Die Lastaufnahmefahrzeuge des erfindungsgemäßen Lager- und/oder Kommissioniersystems sind insbesondere zum Verfahren in dem Regalsystem ausgebildet. Mindestens eines, vorzugsweise mehrere oder sämtliche der Lastaufnahmefahrzeuge, sind zum (vorzugsweise autonomen) Verfahren in dem Regalsystem ausgebildet. Das Lastaufnahmefahrzeug weist einen länglich ausgebildeten Rahmen mit einem daran angeordneten Fahrgestell und einer Antriebseinrichtung zum Verfahren des Lastaufnahmefahrzeugs in Längsrichtung, mindestens einen auf dem Rahmen angeordneten Lastaufnahmeabschnitt zur Aufnahme eines Ladehilfsmittels und/oder einer Ladung, und mindestens eine Hubeinrichtung zum Anheben und Absenken des Lastaufnahmeabschnitts auf. Das Lastaufnahmefahrzeug ist länglich ausgebildet und mindestens doppelt so lang wie breit.

Bevorzugt sind mindestens zwei auf dem Rahmen angeordnete Lastaufnahmeabschnitte vorgesehen, die unabhängig voneinander mit jeweiligen Hubeinrichtungen anhebbar und absenkbar sind.

Es ist ferner bevorzugt, eine Kopplungseinrichtung zum Koppeln mehrerer Lastaufnahmefahrzeuge miteinander vorzusehen, wobei die Kopplung kommunikativ, nicht mechanisch erfolgt. Dabei ist ein Lastaufnahmefahrzeug als Master und das/die andere(n) Lastaufnahmefahrzeug(e) als Slave definiert. Es kann allerdings jedes Lastaufnahmefahrzeug vorzugsweise als Master oder Slave verwendet werden.

Die Kopplungseinrichtung ist dabei vorzugsweise eingerichtet (i) mindestens zwei längs zueinander ausgerichtete Lastaufnahmefahrzeuge miteinander zu koppeln, oder (ii) mindestens zwei in Querrichtung relative zueinander ausgerichtete Lastaufnahmefahrzeuge miteinander zu koppeln, oder (iii) mindestens zwei in Längsrichtung relative zueinander ausgerichtete Lastaufnahmefahrzeuge und mindestens zwei in Querrichtung relative zueinander ausgerichtete Lastaufnahmefahrzeuge miteinander zu koppeln.

Die Antriebseinrichtung kann verschiedene Komponenten aufweisen, wie z.B. (i) Räder, Rollen, Riemen und/oder Ketten, mit denen das Lastaufnahmefahrzeug verfahrbar ist, oder (ii) mindestens einen Motor, optional mit Getriebe, oder (iii) eine Steuerung zum autonomen Verfahren des Lastaufnahmefahrzeugs, oder (iv) einen Energiespeicher, vorzugsweise in Form eines Akkus, Kondensators, insbesondere Superkondensators, oder (v) jegliche Kombination aus (i) bis (iv).

Das Lastaufnahmefahrzeug kann beispielsweise auch eine Einrichtung zum Fördern des Ladehilfsmittels und/oder der Ladung in Längsrichtung, insbesondere einen oder mehrere Rad-, Rollen-, Riemen- und/oder Kettenförderer, aufweisen. Die Einrichtung zum Fördern kann z.B. am Rahmen, Fahrgestell oder Lastaufnahmeabschnitt des Lastaufnahmefahrzeugs vorgesehen sein. Besonders vorteilhaft ist die Einrichtung zum Fördern durch die Antriebseinrichtung, vorzugsweise die Räder, Rollen, Riemen und/oder Ketten, bereitgestellt, indem sie über den Lastaufnahmeabschnitt oder das sonst höchste Bauteil hinaus mit dem Ladehilfsmittel und/oder der Ladung direkt in Kontakt bringbar ist.

Bei eingefahrener Hubeinrichtung beträgt die Höhe des Lastaufnahmefahrzeugs vorzugsweise maximal 150 mm, vorzugsweise maximal 100 mm.

Ein weiterer Aspekt der Erfindung betrifft ein Shuttle für ein Regalsystem mit einem Rahmen, einem Fahrgestell und einem Aufnahmebereich, wobei das Shuttle ausgebildet ist, sowohl in Längs- als auch in Quergassen des Regalsystems zu verfahren, und wobei der Aufnahmebereich mindestens zwei Lastaufnahmefahrzeuge gleichzeitig aufnehmen kann.

Der Aufnahmebereich des Shuttles weist bevorzugt mehrere parallel zueinander ausgerichtete Profilschienen auf, wobei in jeder der Profilschienen mindestens ein Lastaufnahmefahrzeug aufnehmbar ist. Beispielswise sind zumindest zwei der Profilschienen derart voneinander beabstandet, dass sie in die nach unten offenen Gabelfreiräume einer Palette passen.

Im Aufnahmebereich des Shuttles kann mindestens eine Einrichtung zum Fördern von Ladehilfsmitteln und/oder Ladung vorgesehen sein. Insbesondere kann dies in Form von Rad-, Rollen-, Riemen- und/oder Kettenförderern realisiert werden.

Die Lastaufnahmefahrzeuge sind bevorzugt zum (insbesondere autonomen) Verfahren in dem Regalsystem ausgebildet. Mindestens eines, vorzugsweise mehrere oder alle der Lastaufnahmefahrzeuge, weist einen länglich ausgebildeten Rahmen mit einem daran angeordneten Fahrgestell und einer Antriebseinrichtung zum Verfahren des Lastaufnahmefahrzeugs in Längsrichtung, mindestens einen auf dem Rahmen angeordneten Lastaufnahmeabschnitt zur Aufnahme eines Ladehilfsmittels und/oder einer Ladung, und mindestens eine Hubeinrichtung zum Anheben und Absenken des Lastaufnahmeabschnitts auf. Das Lastaufnahmefahrzeug ist länglich ausgebildet und mindestens doppelt so lang wie breit.

Bevorzugt sind mindestens zwei auf dem Rahmen angeordnete Lastaufnahmeabschnitte vorgesehen, die unabhängig voneinander mit jeweiligen Hubeinrichtungen anhebbar und absenkbar sind.

Es ist ferner bevorzugt, eine Kopplungseinrichtung zum Koppeln mehrerer Lastaufnahmefahrzeuge miteinander vorzusehen, wobei die Kopplung kommunikativ, nicht mechanisch erfolgt. Dabei ist ein Lastaufnahmefahrzeug als Master und das/die andere(n) Lastaufnahmefahrzeug(e) als Slave definiert. Es kann allerdings jedes Lastaufnahmefahrzeug vorzugsweise als Master oder Slave verwendet werden.

Die Kopplungseinrichtung ist dabei vorzugsweise eingerichtet (i) mindestens zwei längs zueinander ausgerichtete Lastaufnahmefahrzeuge miteinander zu koppeln, oder (ii) mindestens zwei in Querrichtung relative zueinander ausgerichtete Lastaufnahmefahrzeuge miteinander zu koppeln, oder (iii) mindestens zwei in Längsrichtung relative zueinander ausgerichtete Lastaufnahmefahrzeuge und mindestens zwei in Querrichtung relative zueinander ausgerichtete Lastaufnahmefahrzeuge miteinander zu koppeln.

Die Antriebseinrichtung kann verschiedene Komponenten aufweisen, wie z.B. (i) Räder, Rollen, Riemen und/oder Ketten, mit denen das Lastaufnahmefahrzeug verfahrbar ist, oder (ii) mindestens einen Motor, optional mit Getriebe, oder (iii) eine Steuerung zum autonomen Verfahren des Lastaufnahmefahrzeugs, oder (iv) einen Energiespeicher, vorzugsweise in Form eines Akkus, Kondensators, insbesondere Superkondensators, oder (v) jegliche Kombination aus (i) bis (iv).

Das Lastaufnahmefahrzeug kann beispielsweise auch eine Einrichtung zum Fördern des Ladehilfsmittels und/oder der Ladung in Längsrichtung, insbesondere einen oder mehrere Rad-, Rollen-, Riemen- und/oder Kettenförderer, aufweisen. Die Einrichtung zum Fördern kann z.B. am Rahmen, Fahrgestell oder Lastaufnahmeabschnitt des Lastaufnahmefahrzeugs vorgesehen sein. Besonders vorteilhaft ist die Einrichtung zum Fördern durch die Antriebseinrichtung, vorzugsweise die Räder, Rollen, Riemen und/oder Ketten, bereitgestellt, indem sie über den Lastaufnahmeabschnitt oder das sonst höchste Bauteil hinaus mit dem Ladehilfsmittel und/oder der Ladung direkt in Kontakt bringbar ist.

Bei eingefahrener Hubeinrichtung beträgt die Höhe des Lastaufnahmefahrzeugs vorzugsweise maximal 150 mm, vorzugsweise maximal 100 mm.

Die Erfindung betrifft ferner ein Lastaufnahmefahrzeug zur Mitführung auf einem Shuttle eines Regalsystems und zum autonomen Verfahren in dem Regalsystem. Das Lastaufnahmefahrzeug weist einen länglich ausgebildeten Rahmen mit einem daran angeordneten Fahrgestell und einer Antriebseinrichtung zum Verfahren des Lastaufnahmefahrzeugs in Längsrichtung, mindestens einen auf dem Rahmen angeordneten Lastaufnahmeabschnitt zur Aufnahme eines Ladehilfsmittels und/oder einer Ladung, und mindestens eine Hubeinrichtung zum Anheben und Absenken des Lastaufnahmeabschnitts auf. Das Lastaufnahmefahrzeug ist länglich ausgebildet und mindestens doppelt so lang wie breit.

Bevorzugt sind mindestens zwei auf dem Rahmen angeordnete Lastaufnahmeabschnitte vorgesehen, die unabhängig voneinander mit jeweiligen Hubeinrichtungen anhebbar und absenkbar sind.

Es ist ferner bevorzugt, eine Kopplungseinrichtung zum Koppeln mehrerer Lastaufnahmefahrzeuge miteinander vorzusehen, wobei die Kopplung kommunikativ, nicht mechanisch erfolgt. Dabei ist ein Lastaufnahmefahrzeug als Master und das/die andere(n) Lastaufnahmefahrzeug(e) als Slave definiert. Es kann allerdings jedes Lastaufnahmefahrzeug vorzugsweise als Master oder Slave verwendet werden.

Die Kopplungseinrichtung ist dabei vorzugsweise eingerichtet (i) mindestens zwei längs zueinander ausgerichtete Lastaufnahmefahrzeuge miteinander zu koppeln, oder (ii) mindestens zwei in Querrichtung relative zueinander ausgerichtete Lastaufnahmefahrzeuge miteinander zu koppeln, oder (iii) mindestens zwei in Längsrichtung relative zueinander ausgerichtete Lastaufnahmefahrzeuge und mindestens zwei in Querrichtung relative zueinander ausgerichtete Lastaufnahmefahrzeuge miteinander zu koppeln.

Die Antriebseinrichtung kann verschiedene Komponenten aufweisen, wie z.B. (i) Räder, Rollen, Riemen und/oder Ketten, mit denen das Lastaufnahmefahrzeug verfahrbar ist, oder (ii) mindestens einen Motor, optional mit Getriebe, oder (iii) eine Steuerung zum autonomen Verfahren des Lastaufnahmefahrzeugs, oder (iv) einen Energiespeicher, vorzugsweise in Form eines Akkus, Kondensators, insbesondere Superkondensators, oder (v) jegliche Kombination aus (i) bis (iv).

Das Lastaufnahmefahrzeug kann beispielsweise auch eine Einrichtung zum Fördern des Ladehilfsmittels und/oder der Ladung in Längsrichtung, insbesondere einen oder mehrere Rad-, Rollen-, Riemen- und/oder Kettenförderer, aufweisen. Die Einrichtung zum Fördern kann z.B. am Rahmen, Fahrgestell oder Lastaufnahmeabschnitt des Lastaufnahmefahrzeugs vorgesehen sein. Besonders vorteilhaft ist die Einrichtung zum Fördern durch die Antriebseinrichtung, vorzugsweise die Räder, Rollen, Riemen und/oder Ketten, bereitgestellt, indem sie über den Lastaufnahmeabschnitt oder das sonst höchste Bauteil hinaus mit dem Ladehilfsmittel und/oder der Ladung direkt in Kontakt bringbar ist.

Bei eingefahrener Hubeinrichtung beträgt die Höhe des Lastaufnahmefahrzeugs vorzugsweise maximal 150 mm, vorzugsweise maximal 100 mm.

Vorteilhaft ist es, die verschiedenen Aspekte der vorliegenden Erfindung zu einem innovativen Gesamtsystem zu kombinieren. Insbesondere die Kombination des erfindungsgemäßen Lager- und/oder Kommissioniersystems mit mindestens einem erfindungsgemäßen Shuttle und/oder mindestens einem erfindungsgemäßen Lastaufnahmefahrzeug führt zu einem gegenüber dem Stand der Technik wesentlich verbesserten und effizienteren Lager- und Kommissioniersystem, das insbesondere wesentlich flexibler und damit wirtschaftlicher betrieben werden kann.

Entsprechend einer solchen Kombination betrifft die Erfindung entsprechend einer Ausführungsform ein Lager- und Kommissioniersystem zur Lagerung, Kommissionierung und Sortierung von Gütern unterschiedlicher Art mit lenkbaren oder sonst längs und quer verfahrbaren Shuttle-Fahrzeugen mit einem oder mehreren Lastaufnahmefahrzeugen, die ein Lagersystem, das für n-fach tiefe Lagerung vorgesehen ist, derart bedienen, dass das Shuttle das oder die Lastaufnahmefahrzeuge an eine beliebige Stelle in einem aus beliebig vielen Längs- und Quergassen aufgebautem Lagersystem bringt. Das oder die Lastaufnahmefahrzeug(e) fahren dann, bevorzugt ohne physikalische Verbindung zum Shuttle-Fahrzeug n-fach tief in einen Lagerkanal. Dort hebt das Lastaufnahmefahrzeug bzw. heben die im Schwarm zusammenarbeitenden Lastaufnahmefahrzeuge das Lagergut an und verbringt/verbringen es anschließend entweder auf dasselbe oder ein anderes Shuttle-Fahrzeug. Das System kann dabei in nur einer oder mehreren Ebenen ausgeführt sein. Bei Ausführung in mehreren Ebenen werden die Güter entweder von einem oder mehreren Lastaufnahmefahrzeugen oder vom Shuttle zu mindestens einem Hublift transportiert, der nur das Ladegut oder das Ladegut mit Lastaufnahmefahrzeug oder das Ladegut mit Lastaufnahmefahrzeug und Shuttle auf eine andere Ebene verbringt, in der weitere Aktionen (z.B. Abtransport über eine Förderstrecke zur Kommissionierung) für das Ladegut vorgesehen sind.

Damit ist die Erfindung eine Kombination von zwei oder mehr Fahrzeugen, nämlich mindestens einem Shuttle und mindestens einem Lastaufnahmefahrzeug, die symbiotisch in einem Regal zusammenarbeiten und dabei in beliebiger Regaltiefe agieren können und somit die Nachteile herkömmlicher Konstruktionen nicht mehr aufweisen und dadurch neue logistische Möglichkeiten eröffnen.

Eine besonders vorteilhafte Arbeitsweise ergibt sich bei der Kombination eines oder mehrerer Shuttle mit jeweils mehreren Lastaufnahmefahrzeugen, weil die Aufnahme der Fördergüter aus mehreren verschiedenen Regalkanälen zeitgleich zum Verfahren des/der Shuttle erfolgen kann. Durch das Parallelisieren des Aufnahmevorgangs in den Regalkanälen und die Fahrt des/der Shuttle in Längs- und/oder Quergängen des Regalsystems wird die Zusammenstellungszeit eines Kommissionierauftrags bestehend aus mehreren Einzelgebinden (z.B. Behältern oder Kartons) und/oder Palletten gegenüber der einzelnen Verbringung aller zu einem Auftrag gehörenden Güter deutlich verkürzt. Dadurch entsteht zusätzlich eine besonders effiziente Art der Auftragszusammenstellung und des Auftragstransportes.

Bevorzugte Ausführungsformen der Erfindung werden nachfolgend unter Bezugnahme auf die Figuren beispielhaft beschrieben. Es zeigen:
- Fig. 1: eine perspektivische Ansicht auf eine Ebene eines erfindungsgemäßen Lagersystems zur Lagerung von Paletten verschiedener Arten;
- Fig. 2: einen Ausschnitt des Lagersystems gemäß Figur 1;
- Fig. 3: eine Ausführungsform eines erfindungsgemäßen Shuttle-Fahrzeugs zur Verwendung im Lagersystem von Figur 1;
- Fig. 4: eine Ausführungsform eines Lastaufnahmefahrzeugs zur Verwendung im Lagersystem gemäß Figur 1 und auf einem Shuttle gemäß Figur 3;
- Fig. 5: eine perspektivische Ansicht einer alternativen Ausführungsform eines erfindungsgemäßen Lagersystems zur Lagerung von Gebinden unterschiedlicher Größe ohne Paletten;
- Fig. 6: einen Ausschnitt des Lagersystems gemäß Figur 5;
- Fig. 7: eine Ausführungsform eines Shuttle-Fahrzeugs zur Verwendung im Lagersystem gemäß Figur 5 mit darin angeordneten Lastaufnahmefahrzeugen;
- Fig. 8: eine perspektivische Ansicht eines Lastaufnahmefahrzeugs zur Verwendung in Kombination mit dem Lagersystem gemäß Figur 5 und einem Shuttle gemäß Figur 7;
- Fig. 9: eine perspektivische Ansicht der Verwendung von mehreren Lastaufnahmefahrzeugen im Verband;
- Fig. 10: eine schematische Draufsicht zur Darstellung verschiedener Komponenten eines Lastaufnahmefahrzeugs;
- Fig. 11: eine Draufsicht zur Darstellung eines mehrfach tiefen Lagersystems gemäß einer Ausführungsform der Erfindung;
- Fig. 12: eine Draufsicht auf ein erfindungsgemäßes Lagersystem zur Darstellung der Vielfalt an Optionen der Handhabungsmöglichkeiten mit einem erfindungsgemäßen Lagersystem;
- Fig. 13: eine Darstellung ähnlich Figur 12, wobei weniger Kanalprofile und Lastaufnahmefahrzeuge zum Einsatz kommen;
- Fig. 14: eine Draufsicht auf ein erfindungsgemäßes Lagersystem zur Lagerung von Paletten unterschiedlicher Arten; und
- Fig. 15a-c: ein erfindungsgemäßes Lastaufnahmefahrzeug, das gleichzeitig als Fördermittel verwendbar ist.

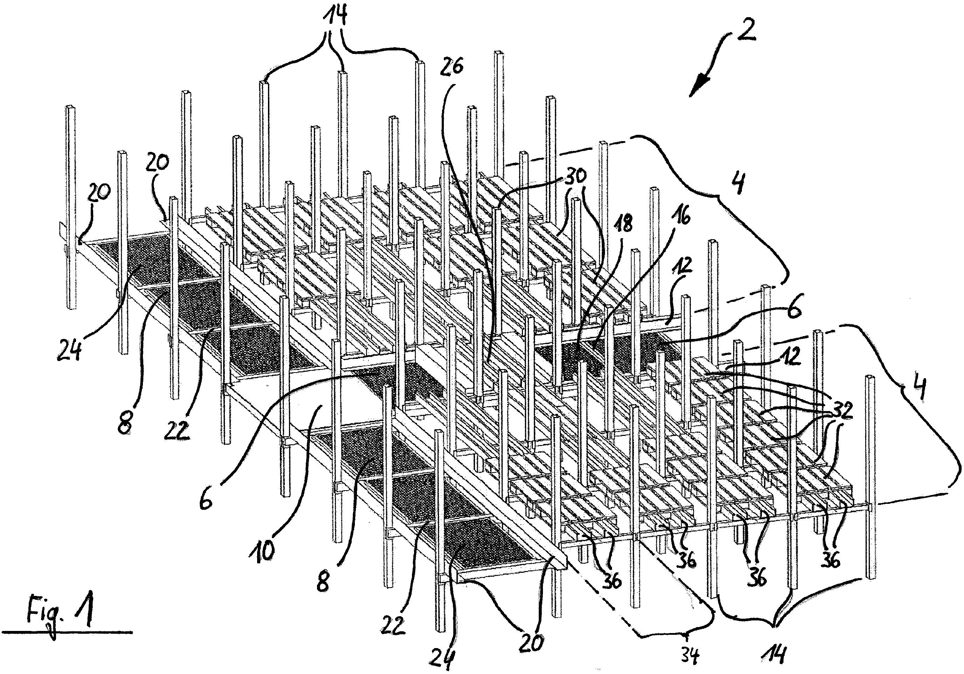

Die Erfindung wird im Anschluss unter Verweis auf die Figuren beispielhaft beschrieben. In Figur 1 ist eine perspektivische Ansicht eines erfindungsgemäßen Lagersystems 2 gezeigt, wobei der Einfachheit halber zur besseren Übersichtlichkeit lediglich eine Lagerebene dargestellt ist. Typischerweise weist das erfindungsgemäße Lagersystem 2 jedoch mehrere, vorzugsweise mindestens fünf Lagerebenen auf, die im Wesentlichen ähnlich zu der dargestellten Lagerebene aufgebaut sind. Die einzelnen Ebenen können sich jedoch hinsichtlich der Art der zu lagernden Gegenstände und damit der speziellen Anordnung der Einrichtungen zum Entnehmen der gelagerten Güter unterscheiden. Verschiedene diesbezügliche Ausführungsformen werden nachfolgend noch im Detail beschrieben.

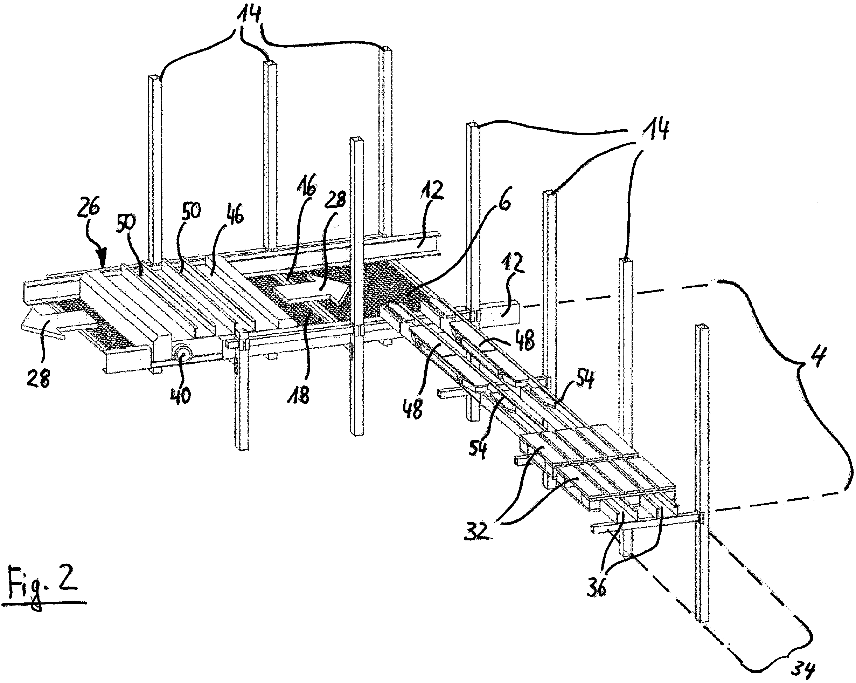

Das in Figur 1 gezeigte Lagersystem weist ein Regalsystem auf, das in verschiedenen Regalreihen 4 gebildet ist. Die Regalreihen 4 sind jeweils durch dazwischen liegende Längsgassen 6 voneinander beabstandet. Die Längsgassen 6 sind wiederum durch mindestens eine Quergasse 8 miteinander verbunden. Die Längs- und Quergassen 6, 8 treffen in einem Kreuzungsbereich 10 aufeinander. Entlang der Längsgassen 6 sind an den gegenüberliegenden Regalreihen jeweilige Schienenprofile 12 vorgesehen. Die Schienenprofile 12 sind vorzugsweise an Regalstehern 14 im Bereich der Längsgänge 6 montiert. Zwischen gegenüberliegenden Regalstehern 14 sind vorzugsweise Quertraversen 16 (Figur 2) vorgesehen, auf denen die Schienenprofile 12 abgestützt sein können. Darüber hinaus können im Bereich der Längsgassen 6 beispielsweise Gitterroste 18 zur Verwendung als Wartungssteg vorgesehen sein.

In ähnlicher Weise können in den Quergängen 8 Schienenprofile 20 an den Regalstehern 14 angeordnet sein. Auch hier sind vorzugsweise Quertraversen 22 zur Auflage der Schienenprofile 20 sowie Gitterroste 24 vorgesehen.

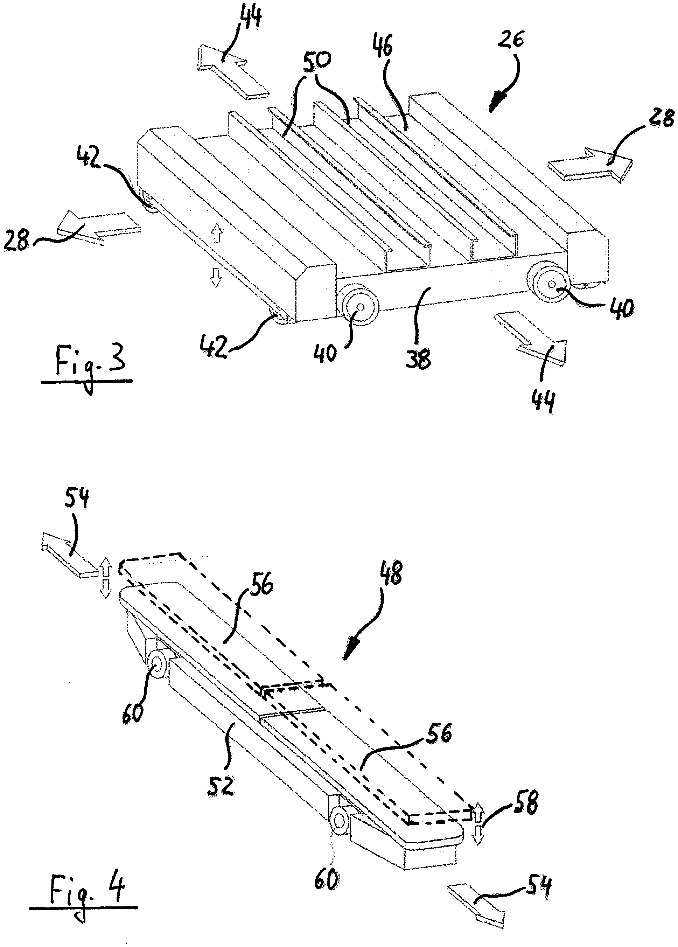

Die Schienenprofile 12 und 20 der Längs- bzw. Quergassen 6, 8 dienen als Fahrschienen für Shuttle-Fahrzeuge 26. In Figuren 1 und 2 ist ein einziges Shuttle-Fahrzeug ("Shuttle") 26 dargestellt, obwohl im erfindungsgemäßen Lagersystem eine Vielzahl von Shuttle-Fahrzeugen 26 gleichzeitig vorgesehen sein kann. Das erfindungsgemäße Shuttle-Fahrzeug 26 wird nachfolgend unter Bezugnahme auf Figur 3 näher erläutert. Wie jedoch in den Figuren 1 und 2 bereits zu erkennen, ist das Shuttle 26 zur Fahrt sowohl in Längs- als auch in Quergängen 6, 8 ausgebildet. In den Figuren 1 und 2 ist das Shuttle 26 in der Längsgasse 6 dargestellt und, wie durch die Pfeile 28 symbolisch gezeigt, zur Bewegung entlang des Längsgasse 6 ausgebildet. Dazu benutzt das Shuttle 26 die Schienenprofile 12 als Fahrschienen für die Längsfahrt. Zum Übergang von einer Längsfahrt in eine Querfahrt wird das Shuttle 26 zu einem Kreuzungsbereich 10 bewegt, von wo aus es entlang der Schienenprofile 20 in Querrichtung entlang der Quergasse 8 verfahrbar ist.

Zum Übergang eines Shuttles 26 von einer Regalebene in eine andere Ebene kann mindesten eine Hubeinrichtung, zum Beispiel in Form eines Lifts, vorgesehen sein. Alternativ können die Shuttle 26 auch derart ausgebildet sein, dass sie sich selbst zwischen verschiedenen Ebenen bewegen können.

Wie in Figuren 1 und 2 dargestellt, können die Regalreihen 4 mehrfach tief ausgebildet sein. In dem dargestellten Ausführungsbeispiel sind die Regalreihen 4 jeweils 3-fach tief ausgebildet, d.h. zur Lagerung von drei Euro-Paletten 30 längs hintereinander oder von sechs "Düsseldorfer" Paletten 32 quer hintereinander dimensioniert. Das erfindungsgemäße Lagersystem 2 kann jedoch auch in beliebigen anderen Tiefen ausgebildet sein, insbesondere auch 1-fach tief oder bis zu 15-fach oder sogar 50-fach tief.

Das Regalsystem 2 weist orthogonal durch die Regalreihen 4 Lagerkanäle 34 auf, von denen in Figur 1 vier nebeneinander dargestellt sind, und in Figur 2 der besseren Übersichtlichkeit lediglich einer. Die Regalkanäle 34 erstrecken sich von einer Längsgasse 6 zur nächsten, benachbarten Längsgasse 6 und überbrücken dadurch den n-fach tiefen Lagerraum der einzelnen Regalreihen 4. In den Lagerkanälen 34 sind in der in Figuren 1 und 2 dargestellten Ausführungsform jeweils zwei Kanalprofile 36 angeordnet, die sich entlang der gesamten Länge der einzelnen Lagerkanäle 34 erstrecken. Vorzugsweise werden diese Kanalprofile 36 direkt zur Aufnahme der Güter verwendet, wie dies in den Figuren 1 und 2 dargestellt ist. Dabei sind die Kanalprofile 36 derart voneinander beabstandet, dass sie in die nach unten offenen Gabelfreiräume von Paletten, insbesondere Euro-Paletten 30 oder Düsseldorfer Paletten 32 passen. Dadurch lässt sich erheblich Lagerhöhe einsparen, da der gesamte Palettenunterbau nicht auf den lasttragenden Kanalprofilen 36 steht, sondern neben und zwischen den Kanalprofilen 36 angeordnet ist.

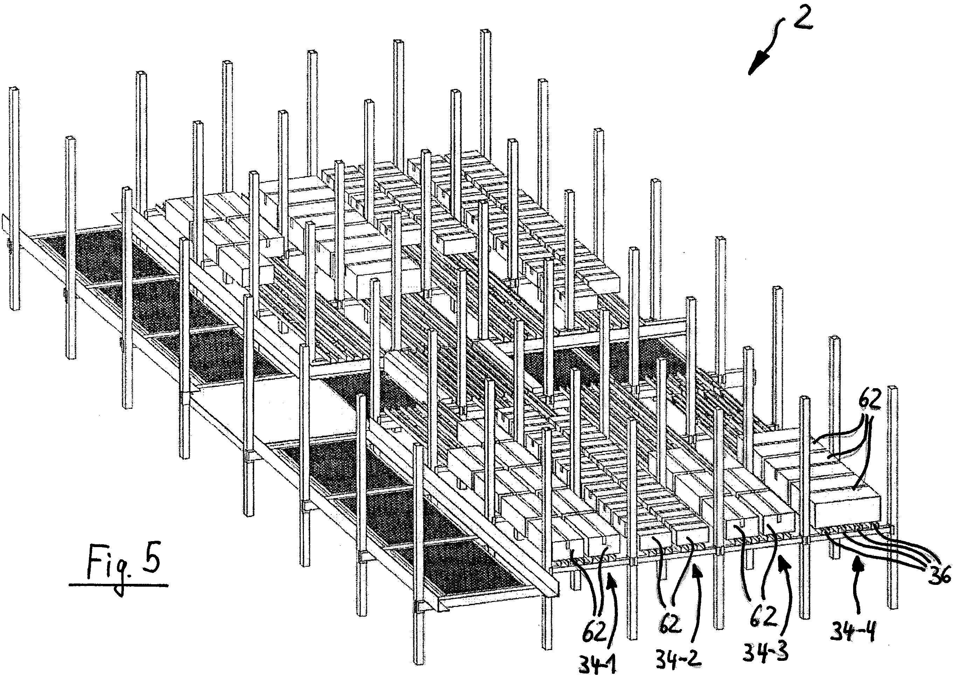

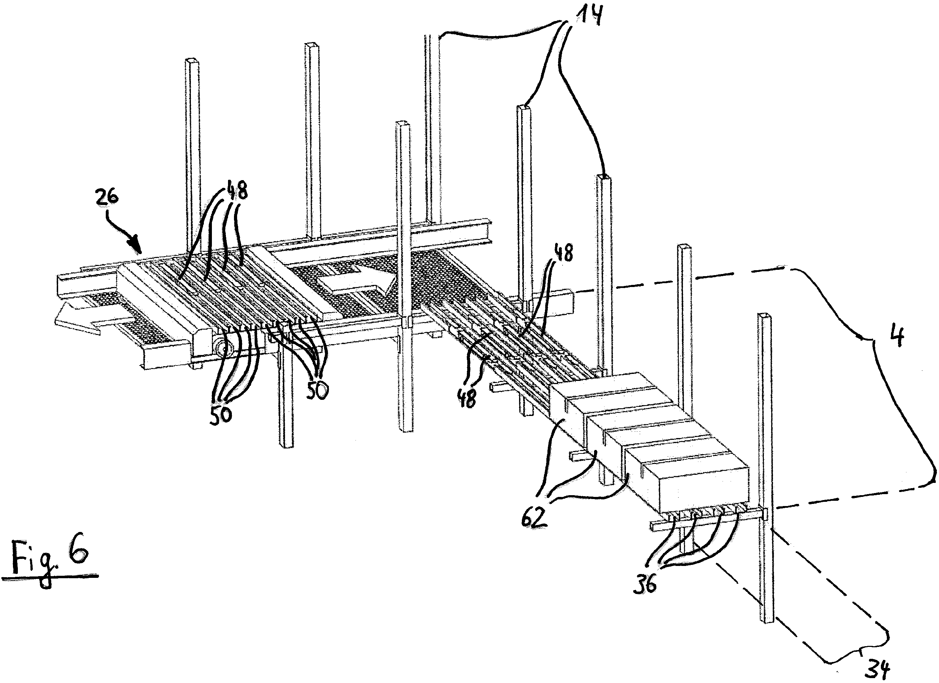

Ein Lagerkanal 34 entspricht üblicherweise einer Stellplatzbreite, die insbesondere zwischen 0,4 m und 1,5 m Breite liegt. Pro Stellplatzbreite, d.h. pro 0,4 m bis 1,5 m Breite, sind mindestens zwei parallel verlaufende Kanalprofile 36 angeordnet, wie dies in der Ausführungsform gemäß den Figuren 1 und 2 dargestellt ist. Alternativ dazu können auch mehr als zwei, insbesondere drei, vier, fünf, 6, 7, 8, 9, 10, 11 oder 12 parallel verlaufende Kanalprofile 36 je Stellplatzbreite (pro 0,4 m bis 1,5 m) vorgesehen sein, wie nachfolgend insbesondere anhand der Figuren 5, 6, 12 und 13 näher beschrieben wird.

Das im Lagersystem 2 ebenfalls vorgesehene mindestens eine Shuttle 26 ist so ausgebildet, dass es sowohl in Längs- als auch in Quergassen 6, 8 des Regalsystems 2 verfahren kann. Hierzu weist das Shuttle 26 gemäß der Darstellung in Figur 3 einen Rahmen 38 mit einem Fahrgestell und daran angebrachten Rädern 40 zur Längsfahrt entlang der Pfeile 28 in Längsgassen 6 und Rädern 42 zur Querfahrt entlang von Pfeilen 44 in Quergassen 8 auf. Die Räder 42 können beispielsweise höhenverstellbar ausgebildet sein, so dass bei eingezogenen Rädern 42 das Shuttle 26 auf den Rädern 40 in Längsrichtung entlang der Pfeile 28 in Längsgassen 6 verfahrbar ist. Bei ausgefahrenen Rädern 42 sind die Räder 40 vom Untergrund abgehoben, so dass das Shuttle 26 in Querrichtung entlang der Pfeile 44 entlang von Quergassen 8 bewegt werden kann. Andere Mechanismen zum Umstellen von Längs- auf Querfahrt des Shuttles 26 sind ebenfalls möglich, beispielsweise schwenk- bzw. drehbare Räder.

Das Shuttle 26 verfügt ferner über einen Aufnahmebereich 46, der zur Aufnahme von mindestens zwei Lastaufnahmefahrzeugen 48 (Figur 2 und 4) gleichzeitig ausgebildet ist. Hierzu hat das Shuttle 26 am Aufnahmebereich 46 vorzugsweise eine Anordnung von Kanalprofilen 50, die in ihrem Abstand der Anordnung der Kanalprofile 36 der Lagerkanäle 34 entsprichen. Dadurch kann bei entsprechender Ausrichtung des Shuttles 26 relativ zu einem Lagerkanal 34 durch die Kanalprofile 50 auf den Shuttle 26 eine Fortführung der Kanalprofile 36 des jeweiligen Lagerkanals 34 realisiert werden. In der dargestellten Ausführungsform gemäß Figur 3 sind wiederum zwei Kanalprofile 50 auf dem Aufnahmebereich 46 des Shuttles 26 vorgesehen. Es können jedoch auch mehr Kanalprofile 50 auf dem Aufnahmebereich 26 angeordnet sein, vorteilhafterweise in Übereinstimmung mit der Anzahl der Kanalprofile 36 der jeweiligen Lagerkanäle. Alternativ dazu können auch unterschiedliche Anzahlen von Kanalprofilen 50 bezüglich der Kanalprofile 36 vorgesehen sein.

Die Kanalprofile 50 sind als Profilschienen ausgebildet und können entsprechen der dargestellten Ausführungsform im Wesentlichen U-förmig geformt sein. Auf dem Aufnahmebereich 46 des Shuttles 26 kann ferner mindestens eine Einrichtung zum Fördern von Ladehilfsmittel und/oder Ladung, beispielsweise in Form von Rad-, Rollen-, Riemen- und/oder Kettenförderern (nicht dargestellt) vorgesehen sein. Damit kann auf vorteilhafte Weise Ladegut auf dem Shuttle 26 verschoben werden und/oder auf das Shuttle 26 verladen werden, ohne dass ein oder mehrere Lastaufnahmefahrzeuge 48 auf dem Shuttle 26 vorhanden sind.

Das erfindungsgemäße Lastaufnahmefahrzeug 48, von dem pro Shuttle mindestens zwei auf dem Aufnahmebereich 26 angeordnet werden können, ist in Figur 4 näher gezeigt. Entsprechend der Darstellung in Figur 4 ist das Lastaufnahmefahrzeug 48 nach Art eines Skateboards ausgebildet und weist eine Länge auf, die mindestens doppelt so groß ist wie seine Breite. Entsprechend einer bevorzugten Ausführungsform ist das Lastaufnahmefahrzeug 48 beispielsweise zwischen 500 und 1300 mm lang, insbesondere zwischen 600 und 700 mm und besonders bevorzugt etwa 640 mm lang und etwa 70-180 mm, vorzugsweise 75-85 mm und insbesondere etwa 80 mm breit. Die Höhe des Lastaufnahmefahrzeugs 48 beträgt maximal 150 mm, bevorzugt maximal 100 mm, vorzugsweise maximal 80 mm oder sogar maximal 60 mm. Die Abmessungen des Lastaufnahmefahrzeugs 48 gemäß der Ausführungsformen der Figuren 1 bis 4 soll so bemessen sein, dass es insbesondere zur Verwendung mit Euro-Paletten 30 und/oder Düsseldorfer Paletten 32 geeignet ist.

Das in Figur 4 gezeigte Lastaufnahmefahrzeug 48 verfügt über einen länglich ausgebildeten Rahmen 52 mit einem daran angeordneten Fahrgestell und einer Antriebseinrichtung zum Verfahren des Lastaufnahmefahrzeugs 48 in Längsrichtung entlang der Pfeile 54 in den Kanalprofilen 36 des Regalsystems 2 bzw. den Kanalprofilen 50 des Shuttles 26. Auf dem Rahmen 52 ist mindestens ein Lastaufnahmeabschnitt 56 zur Aufnahme eines Ladehilfsmittels, z.B. einer Palette 30, 32, und/oder einer Ladung vorgesehen. In der in Figur 4 gezeigten Ausführungsform sind zwei auf dem Rahmen 52 angeordnete Lastaufnahmeabschnitte 56 vorgesehen, die unabhängig voneinander mit einer jeweiligen Hubeinrichtung anhebbar und absenkbar sind (Pfeile 58). Grundsätzlich kann das erfindungsgemäße Lastaufnahmefahrzeug 48 jedoch auch nur einen oder mehr als zwei derartige Lastaufnahmeabschnitte 56 aufweisen. Vorzugsweise hat jeder dieser Lastaufnahmeabschnitte 56 eine ihm zugeordnete Hubeinrichtung zum Anheben und Absenken des jeweiligen Lastaufnahmeabschnitts 56.

Das erfindungsgemäße Lastaufnahmefahrzeug 48 kann ferner eine Kopplungseinrichtung (nicht dargestellt) zum Koppeln mehrerer Lastaufnahmefahrzeuge 48 miteinander aufweisen. Dabei ist die Kopplung rein kommunikativ, also nicht mechanisch, wobei ein Lastaufnahmefahrzeug 48 als Master fungiert und die damit gekoppelten anderen Lastaufnahmefahrzeuge 48 als Slave agieren. Vorzugsweise ist jedoch jedes Lastaufnahmefahrzeug 48 geeignet, sowohl als Master als auch als Slave definiert zu werden. Die Kopplungseinrichtung ist vorzugsweise derart konfiguriert, dass mindestens zwei längs zueinander ausgerichtete und vorzugsweise direkt hintereinander angeordnete Lastaufnahmefahrzeuge miteinander gekoppelt werden. Alternativ dazu oder zusätzlich dazu können mindestens zwei in Querrichtung relativ zueinander ausgerichtete und vorzugsweise in direkt benachbarten Kanalprofilen angeordnete Lastaufnahmefahrzeuge miteinander gekoppelt werden. In Figur 2 sind beispielsweise zwei in Querrichtung relativ zueinander ausgerichtete Lastaufnahmefahrzeuge 48 miteinander gekoppelt. Diese können zur Aufnahme einer der beiden dargestellten Düsseldorfer Paletten 32 oder beider Düsseldorfer Paletten 32 gemeinsam miteinander entlang der Pfeile 54 unter die Paletten 32 gefahren werden, um diese aufzunehmen.

Das Lastaufnahmefahrzeug 48 verfügt ferner vorzugsweise über Räder 60, die über einen Motor, optional mit Getriebe, angetrieben werden. Anstelle der Räder 60 können auch Rollen, Riemen und/oder Ketten als Antriebselemente eingesetzt werden. Ferner ist eine Steuerung vorgesehen, die vorzugsweise ein autonomes Verfahren des Lastaufnahmefahrzeugs 48 ermöglicht.

Unter dem Begriff "autonom" ist im Sinne der vorliegenden Erfindung ein komplett selbstständiges Verfahren der Lastaufnahmefahrzeuge 48 und/oder der Shuttle 26 zu verstehen, wobei keinerlei Eingriff von außen notwendig ist, um sie durch das Regalsystem 2 zu navigieren. Dazu verfügen die Lastaufnahmefahrzeuge und/oder Shuttle vorzugsweise über eine intelligente Steuerung, die beispielsweise "Verkehrsregeln" im Lagersystem 2 befolgen kann und eine entsprechende Sensorik, mit der der Verkehr insbesondere beim Übergang von einer Gasse in eine andere beobachtet und erfasst werden kann.

Die Lastaufnahmefahrzeuge 48 der vorliegenden Erfindung und/oder Shuttle 26 der vorliegenden Erfindung werden vorzugsweise kabellos betrieben und verfügen über einen Energiespeicher, beispielsweise in Form eines Akkus, Kondensators, insbesondere Superkondensators, oder Kombination daraus. Entlang des Regalsystems sind vorzugsweise verschiedene Ladestellen vorgesehen, an denen die Fahrzeuge den Kondensator und/oder Akku während der Fahrt oder bei Stillstand laden können.

Das Lastaufnahmefahrzeug 48 kann ferner eine Einrichtung zum Fördern des Ladehilfsmittels und/oder der Ladung in Längsrichtung aufweisen, wobei diese Einrichtung beispielsweise einen oder mehrere Rad-, Rollen-, Riemen- und/oder Kettenförderer aufweisen kann.

Erfindungsgemäß können mehrere der Lastaufnahmefahrzeuge 48 in einer Basisstation (nicht gezeigt) angeordnet werden, die stationär oder mobil im Regalsystem vorgesehen sein kann. Die Basisstation kann beispielsweise analog zum Aufnahmebereich 26 des Shuttle 26 ausgebildet sein, um mehrere Lastaufnahmefahrzeuge 48 aufzunehmen. In einer mobilen Ausgestaltung der Basisstation ist sie zur Anbringung an einem beliebigen Regalfahrzeug, z.B. einem Regalbediengerät, ausgebildet, so dass damit mehrere Lastaufnahmefahrzeuge 48 verfahren werden können. Die Basisstation kann derart beschaffen sein, dass die Lastaufnahmefahrzeuge 48 darin beispielsweise aufgeladen und/oder Daten übermittelt werden.

Zum Betrieb des Lagersystems der vorliegenden Erfindung, insbesondere zum Ein- oder Auslagern von Gütern fährt das Shuttle 26 entsprechend einem Auftrag an die vorgesehene Lagerstelle in einem Längsgang 6 und richtet sich mit den entsprechenden Kanalprofilen 36 eines Lagergangs 34 aus. Im Anschluss daran fahren beispielsweise zwei oder vier Lastaufnahmefahrzeuge, die vorzugsweise durch die Koppeleinrichtung miteinander zu einem Verbund oder Schwarm gekoppelt sind, in die Kanalprofile 36 eines Lagerkanals 34. Dabei können sie unter darin gelagerten Gütern hindurch fahren, bis sie die gewünschte Lagerposition erreicht haben. Zur Aufnahme von Lagergut, hier Euro-Paletten 30 oder Düsseldorfer Paletten 32, werden die Lastaufnahmefahrzeuge 48 unter der jeweiligen Palette oder unter den jeweiligen Paletten positioniert und mithilfe der Hubeinrichtung wird die jeweilige Palette oder werden die jeweiligen Paletten von den Kanalprofilen 36 angehoben. Danach können die Paletten entlang der Kanalprofile 36 auf den Lastaufnahmefahrzeugen 48 entlang des Lagerkanals 34 befördert werden. Hierzu kann der Rückweg zum Shuttle 26 angetreten werden oder die Lastaufnahmefahrzeuge 48 fahren in die benachbarte bzw. gegenüberliegende Längsgasse 6 und fahren dort auf ein Shuttle 26, das wiederum korrekt ausgerichtet mit den Kanalprofilen 36 positioniert ist. Danach kann die Ladung mit dem Shuttle 26 weiter transportiert werden.

Mit dem erfindungsgemäßen Lagersystem ist es darüber hinaus möglich, dass auf jedem Shuttle 26 beispielsweise vier Lastaufnahmefahrzeuge 48 vorgesehen sind, die in unterschiedliche Lagerkanäle 34 jeweils in quer zueinander ausgerichteten Zweierpaaren geschickt werden, um Düsseldorfer Paletten 32 aus verschiedenen Lagerkanälen 34 zum Längsgang 6 zu transportieren. Dasselbe oder ein anderes Shuttle 26 kann dann die beiden aus unterschiedlichen Lagerkanälen 34 bereitgestellten Düsseldorfer Paletten 32 aufnehmen.

Es ist auch ein Betrieb möglich, bei dem Lastaufnahmefahrzeuge 48 in den Lagerkanälen 34 zumindest vorübergehend verbleiben. Dazu können sie z.B. nachdem sie die Ladung auf das Shuttle 26 transportiert haben zurück in die Lagerkanäle fahren, um weitere Güter für einen nachfolgenden Transport durch ein Shuttle 26 bereitzustellen.

Nachfolgend wird im Zusammenhang mit den Figuren 5-8 eine leicht abgewandelte Ausführungsform des erfindungsgemäßen Lagersystems beschrieben, das alternativ zu dem in Figuren 1-4 beschriebenen System oder in Kombination damit eingesetzt werden kann. Der Grundaufbau des Lagersystems 2, des Shuttles 26 und des Lastaufnahmefahrzeugs 48 entspricht dabei der vorstehenden Beschreibung. Das Lagersystem 2 gemäß den Figuren 5-8 unterscheidet sich von dem vorstehend beschriebenen Ausführungsbeispiel im Wesentlichen dadurch, dass das Lagergut palettenlos, insbesondere in Form von Gebinden 62 unterschiedlicher Größe realisiert ist. In Figur 5 sind beispielsweise vier verschiedene Gebindegrößen dargestellt. So sind beispielsweise in Lagergängen 34-1 Gebinde 62 einer mittleren Größe angeordnet, in einem Lagerkanal 34-2 Gebinde 62 kleiner Größe, in einem Lagerkanal 34-3 wiederum Gebinde 62 der mittleren Größe und in einem Lagerkanal 34-4 Gebinde 62 mit den größten Abmessungen eingelagert. Jeder der Lagerkanäle 34-1 bis 34-4 verfügt in der dargestellten Ausführungsform über vier parallel zueinander angeordnete Kanalprofile 36. Auf den Kanalprofilen 36 ist das Lagergut in Form der verschiedenen Gebinde 62 jeweils derart abgelegt, dass es zumindest auf zwei Kanalprofilen 36 aufliegt Dies ist jedoch nicht notwendigerweise erforderlich, vielmehr können noch kleinere Gebinde 62 auch auf einem einzigen Kanalprofil gelagert sein.

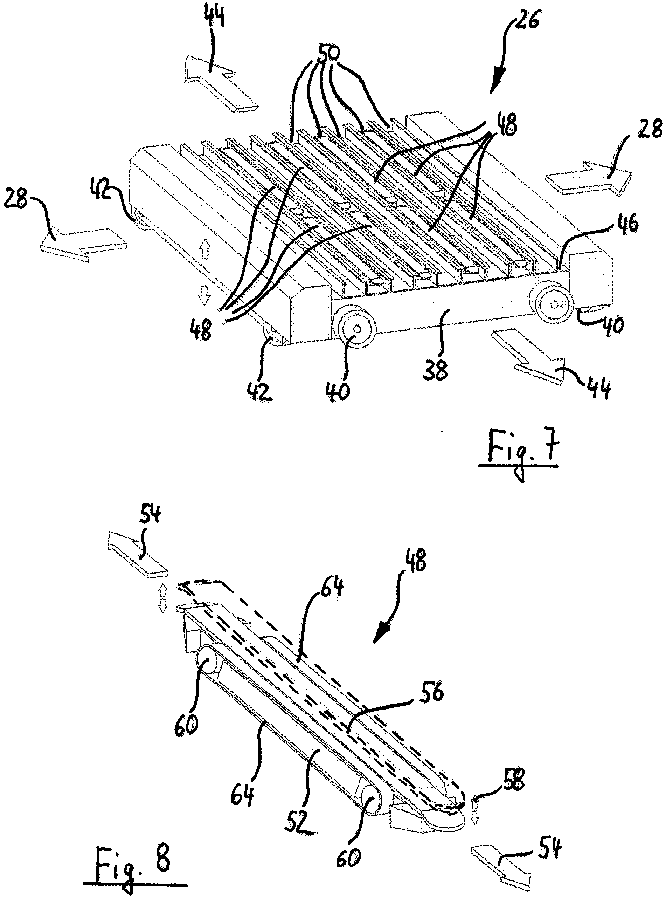

In Figur 7 ist das Shuttle-Fahrzeug 26 gemäß dieser Ausführungsform näher gezeigt. Bei diesem Shuttle-Fahrzeug 26 sind nicht nur analog zum Regalsystem 4 Kanalprofile 50 auf dem Aufnahmebereich 46 angeordnet, sondern neun Kanalprofile. Damit kann das Shuttle 26 beispielsweise zusätzliche Lastaufnahmefahrzeuge 48 mit sich führen, die bei entsprechender Ausrichtung mit den Kanalprofilen 36 des Lagersystems 2 in die jeweiligen Regalreihen 4 abgegeben werden können. Auf dem Shuttle 26 gemäß Figur 7 sind acht Lastaufnahmefahrzeuge 48 in vier Kanalprofilen 50 angeordnet. Dabei sind jeweils zwei Lastaufnahmefahrzeuge 48 in Längsrichtung benachbart zueinander in einem Kanalprofil 50 vorgesehen. Zwischen in Querrichtung benachbarten Lastaufnahmefahrzeugen 48 ist in der dargestellten Variante jeweils ein Kanalprofil frei. Selbstverständlich kann das in Figur 7 gezeigte Shuttle 26 auch zur Verwendung in Lagerabschnitten des Lagersystems 2 verwendet werden, in denen in den Lagerkanälen ebenfalls mehr als vier, insbesondere auch neun Kanalprofile 36 vorgesehen sind. Alternativ dazu kann das Shuttle 26 auch für Kanalsysteme verwendet werden, in denen weniger als vier Kanalprofile 36 pro Lagerkanal 34 vorgesehen sind.

In Figur 8 ist eine modifizierte Ausführungsform eines Lastaufnahmefahrzeugs 48 dargestellt. Ein derartiges Lastaufnahmefahrzeug 48 kann selbstverständlich auch im Zusammenhang mit der in den Figuren 1-3 beschriebenen Ausführungsform verwendet werden. Gleichfalls kann das im Zusammenhang mit Figur 4 beschrieben Lastaufnahmefahrzeug 48 auch für die Ausführungsform des Lagersystems und Shuttles gemäß der Figuren 5-7 verwendet werden. Das Lastaufnahmefahrzeug 48 gemäß Figur 8 verfügt wiederum über eine Rahmen 52 und mindestens einen Lastaufnahmeabschnitt 56. Bei dieser Ausführungsform ist zum Antrieb des Lastaufnahmefahrzeugs 48 jedoch anstelle von Rädern 60, die direkt zum Antrieb verwendet werden, über Antriebsrädern 60 ein Riemen 64 vorgesehen, so dass jeweils ein auf der jeweiligen Seite des Fahrzeugs vorgesehenes Räderpaar 60 zusammen mit einem Riemen 64 eine Antriebseinheit bildet. Der Lastaufnahmeabschnitt 56 gemäß dieser Ausführungsform lässt sich, wie anhand der Pfeile 58 schematisch dargestellt, in seiner Höhe zur Aufnahme von Lasten anheben. Analog zur Ausführungsform gemäß Figur 4, kann auch das Lastaufnahmefahrzeug 48 gemäß Figur 8 mehr als einen Lastaufnahmeabschnitt aufweisen.

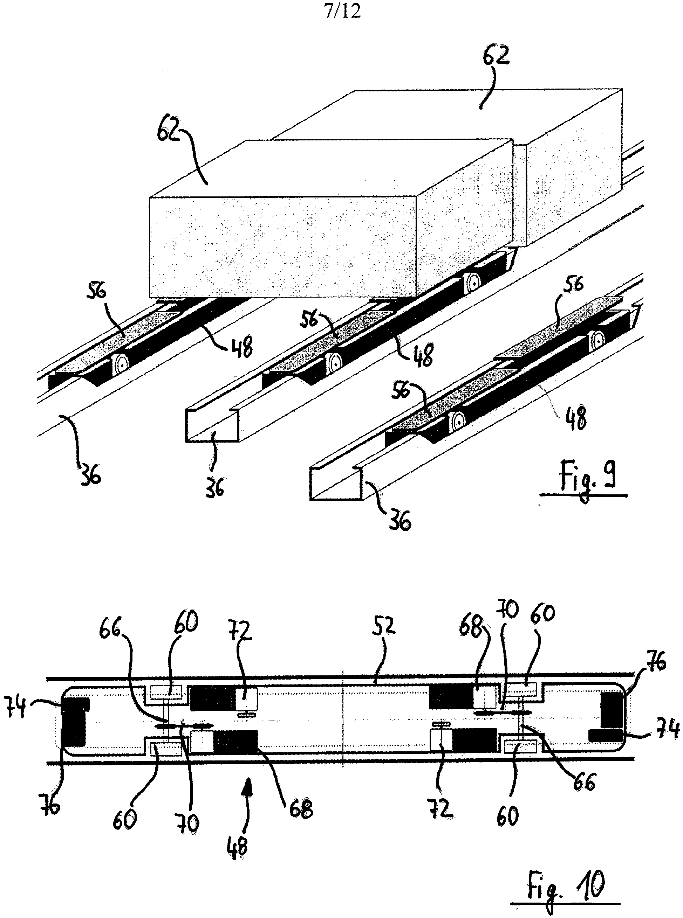

Dies ist schematisch im Zusammenhang mit Figur 9 dargestellt. Gemäß Figur 9 befinden sich zwei Lastaufnahmefahrzeuge 48 im Bereich eines Ladeguts 62. Dieses ist bereits anhand zweier angehobener Lastaufnahmeabschnitte 56 von zwei Lastaufnahmefahrzeugen 48 vom jeweiligen Kanalprofil 36 angehoben und kann nun mit den Lastaufnahmefahrzeugen 48 entlang eines Lagerkanals 34 bis zu einem Längsgang 6 bewegt werden, und dort auf ein Shuttle 26 verladen werden.

In Figur 10 ist ein Lastaufnahmefahrzeug 48 schematisch in Draufsicht dargestellt, wobei einige Komponenten näher gezeigt sind. Am Rahmen 52 ist ein Fahrgestell mit den Rädern 60 und einer die beiden Räder verbindenden Achse 66 sowie einer Antriebseinrichtung mit einem Motor 68 und einem Riementrieb 70 vorgesehen. Ferner ist in Figur 10 ein Antrieb 72 für die Hubeinrichtung des jeweiligen Lastaufnahmeabschnitts 56 schematisch dargestellt. Im Bereich des vorderen und hinteren Endes des Lastaufnahmefahrzeugs 48 sind Sensoren 74 zur Positionierung und Fahrwegkontrolle vorgesehen. Darüber hinaus sind in Figur 10 Mittel 76 schematisch dargestellt, die zum Koppeln des Lastaufnahmefahrzeugs 48 mit anderen Lastaufnahmefahrzeugen geeignet sind.

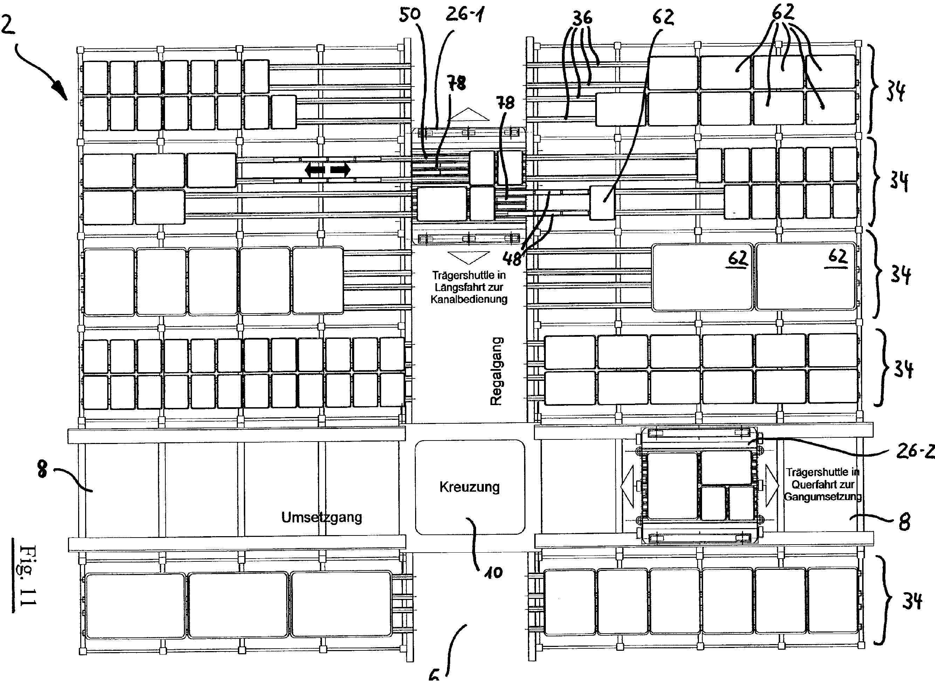

In Figur 11 ist ein erfindungsgemäßes Lagersystem 2, ähnlich dem in Figur 5 dargestellten Lagersystem 2, in Draufsicht dargestellt. Darin sind Längsgänge 6 und Quergänge 8 sowie ein Kreuzungsbereich 10 erkennbar. Auch bei diesem Lagersystem 2 kommen mehrfach tiefe Regalreihen 4 zum Einsatz, wobei pro Lagerkanal 34 vier Kanalprofile 36 vorgesehen sind. Auf den Shuttle-Fahrzeugen 26 sind verschiedene Gebinde 62 von Lagergütern dargestellt, wobei das Shuttle 26-1 gerade mit einem weiteren Gebinde 62 mittels Lastaufnahmefahrzeugen 48 beladen wird. Das Shuttle 26-2 ist bereits voll beladen und transportiert das Lagergut beispielsweise zu einem Kommissionierplatz. Alternativ dazu kann mit dem erfindungsgemäßen System durch die Verwendung verschiedener Lastaufnahmefahrzeuge 48 in Kombination mit dem erfindungsgemäßen Shuttle 26 ein Kommissionieren bereits beim Entnehmen des Lagerguts aus dem Regalsystem erfolgen. Eine Zusammenstellung verschiedener Lagergüter kann dann, wie beispielsweise anhand des Shuttles 26-2 gezeigt, direkt zur Weiterverarbeitung bzw. zum Abtransport verbracht werden.

Insbesondere zum Kommissionieren, aber auch zur Aufnahme von Ladegut kann es vorteilhaft sein, das Shuttle 26 mit einer Einrichtung zum Fördern von Ladehilfsmitteln, z.B. Paletten 30, 32 und/oder Ladegut 62 auszustatten. Eine derartige Einrichtung kann beispielsweise in Form von Rad-, Rollen-, Riemen-, und/oder Kettenförderern ausgebildet sein. In der Ausführungsform gemäß Figur 11 verfügen die Shuttle 26-1 und 26-2 über jeweils zwischen den Kanalprofilen 50 angeordnete Fördereinrichtungen 78. Mit diesen Fördereinrichtungen 78 kann das Ladegut direkt vom Lastaufnahmefahrzeug 48 übernommen werden, ohne dass dieses vollständig auf das Shuttle 26 verfahren werden muss. Dadurch kann das Lastaufnahmefahrzeug 48, sobald das Ladegut 62 an das Shuttle 26 übergeben ist, wieder zur Aufnahme weiteren Ladeguts im demselben oder einem gegenüberliegenden Lagerkanal 34 eingesetzt werden. Das auf dem Shuttle angekommene Ladegut 62 kann dann mithilfe der Fördereinrichtung 78 wie gewünscht positioniert werden.

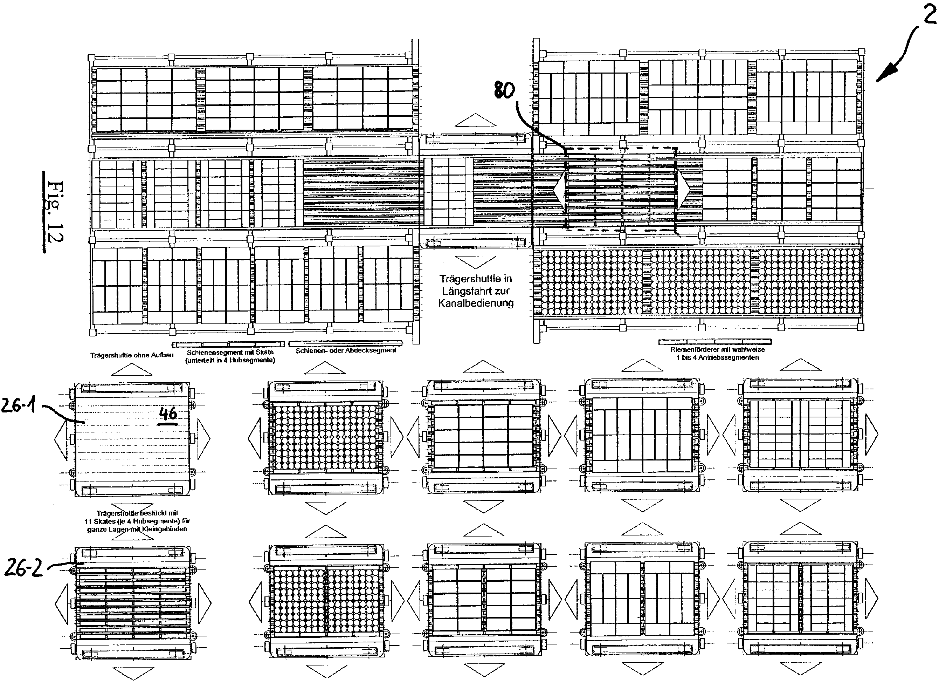

In Figur 12 ist eine weitere Ausführungsform eines erfindungsgemäßen Lagersystems 2 mit Kommissionierfähigkeit dargestellt. Allerdings weist das Shuttle 26 bei dieser Ausführungsform eine höhere Anzahl von Kanalprofilen 50 auf, als dies bei der Ausführungsform gemäß der Figur 11 der Fall ist. Entsprechend der Darstellung in der oberen Hälfte von Figur 12 verfügen sowohl das Shuttle 26 als auch die Lagerkanäle jeweils über 11 Kanalprofile 50 bzw. 36, in die entsprechende Anzahlen von Lastaufnahmefahrzeugen nebeneinander eingeführt werden können. Im Bereich des markierten Feldes 80 in Figur 12 sind 11 x 4 Lastaufnahmefahrzeuge 48 im Verbund zum Einsatz vorgesehen. Es sind also 11 Lastaufnahmefahrzeuge nebeneinander in den jeweiligen Kanalprofilen 36 und jeweils vier Lastaufnahmefahrzeuge 48 hintereinander in jedem Kanalprofil 36 angeordnet. Damit lassen sich auch ganze Palettenlagen und/oder ganze Lagentürme (mehrere ganze Lagen) z.B. mit relativ kleinen Gebinden 62 und/oder Gebindetürme (Turm aus einem Teil mehrerer Lagen) problemlos aufgreifen und auf das Shuttle 26 verbringen. Anstelle von vier in Längsrichtung miteinander gekoppelten einzelnen Lastaufnahmefahrzeugen 48 können beispielsweise auch nur zwei oder nur ein Lastaufnahmefahrzeug(e) verwendet werden, wobei dann vorzugsweise pro Lastaufnahmefahrzeug jeweils zwei, drei, vier oder mehr individuell anhebbare Lastaufnahmeabschnitte 56 vorgesehen sind.

Auch die Verwendung von Fördereinrichtungen, wie dies im Zusammenhang mit Figur 11 beschrieben ist, ist im Zusammenhang mit dieser Ausführungsform möglich. In der unteren Hälfte von Figur 12 sind zehn verschiedene Beispiele von Ladezuständen des Shuttles gemäß dieser Ausführungsform dargestellt. Das Shuttle 26-1 verfügt über einen Lastaufnahmebereich 46, der mit verschiedenen Kanalprofilen 50 und darin vorgesehen Lastaufnahmefahrzeugen bestückbar ist. Das Shuttle 26-2 ist im Bereich des Aufnahmebereichs 46, wie bereits vorstehend beschrieben, mit elf parallel zueinander angeordneten Kanalprofilen 50 und darin vorgesehenen Lastaufnahmefahrzeugen bestückt. Mit dieser Bestückung lassen sich Gebinde in vielfältiger Art und Weise mit dem Shuttle 26 aufnehmen, wie anhand der übrigen acht Darstellungen gemäße Figur 12 erkennbar ist. In der oberen "Zeile" der dargestellten Shuttle 26 sind verschiedene Lagergüter auf Euro-Paletten 30 lagenweise angeordnet. In der unteren "Zeile" von Figur 12 sind die gleichen Anordnungen von Lagergütern auf Düsseldorfer Paletten 32 auf gezeigt. Für sämtliche der gezeigten Anordnungen und Palettenvarianten kann immer das gleiche Shuttle 26 verwendet werden.

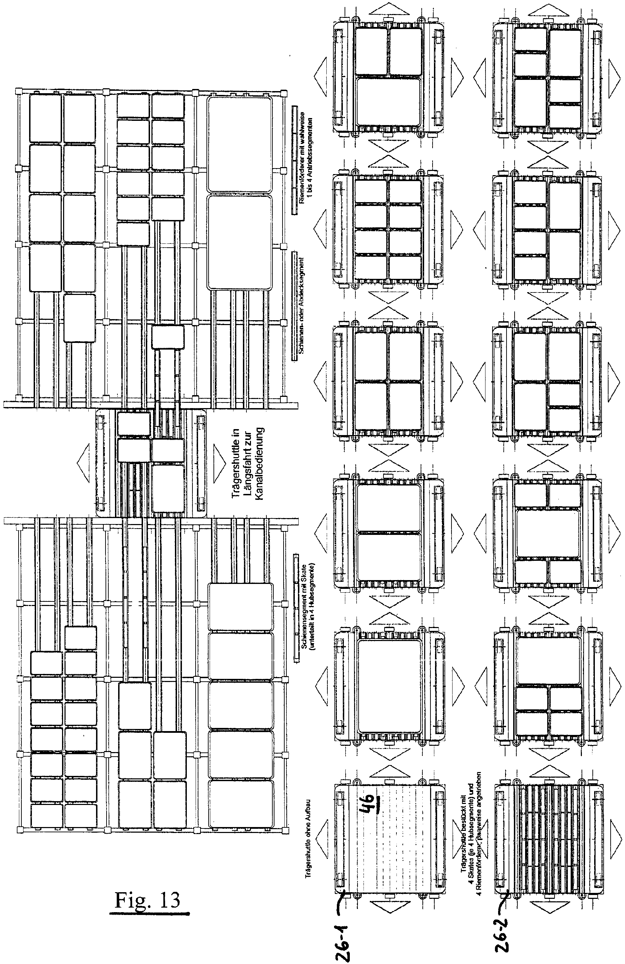

Figur 13 ist wiederum eine Darstellung ähnlich Figur 11, wobei in der unteren Hälfte das Shuttle 26 wiederum in verschiedenen Konfigurationen dargestellt ist. Das Shuttle 26-1 ist mit einem Aufnahmebereich 46 dargestellt, wobei beim Shuttle 26-2 auf dem Aufnahmebereich vier Kanalprofile 50 vorgesehen sind und jeweils zwei dazwischen angeordnete Fördereinrichtungen 78, wie vorstehend bereits im Zusammenhang mit Figur 11 beschrieben. Die übrigen zehn Darstellungen des Shuttles zeigen verschiedenen Lademöglichkeiten verschieden großer Gebinde auf einem derartigen Shuttle 26.

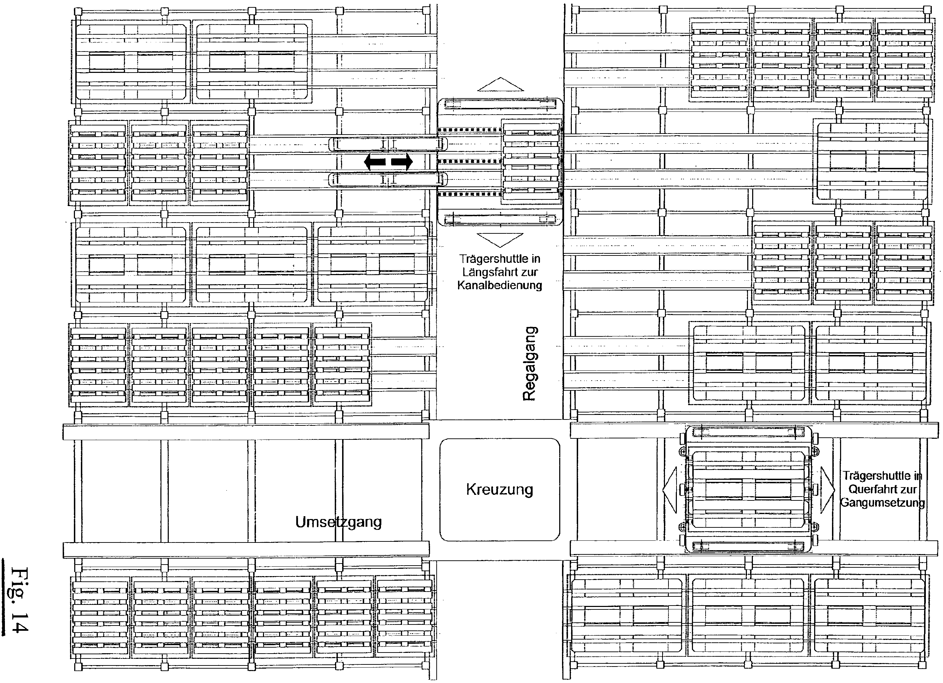

Die Darstellung gemäß Figur 14 zeigt das Regalsystem 2 gemäß der Erfindung in Verwendung mit Paletten verschiedener Größen. Wie bereits vorstehend im Zusammenhang mit den Figuren 1-4 erläutert, können anstelle der Einlagerung verschiedener Paletten zusätzlich auch palettenlose Gebinde im Regalsystem untergebracht werden.

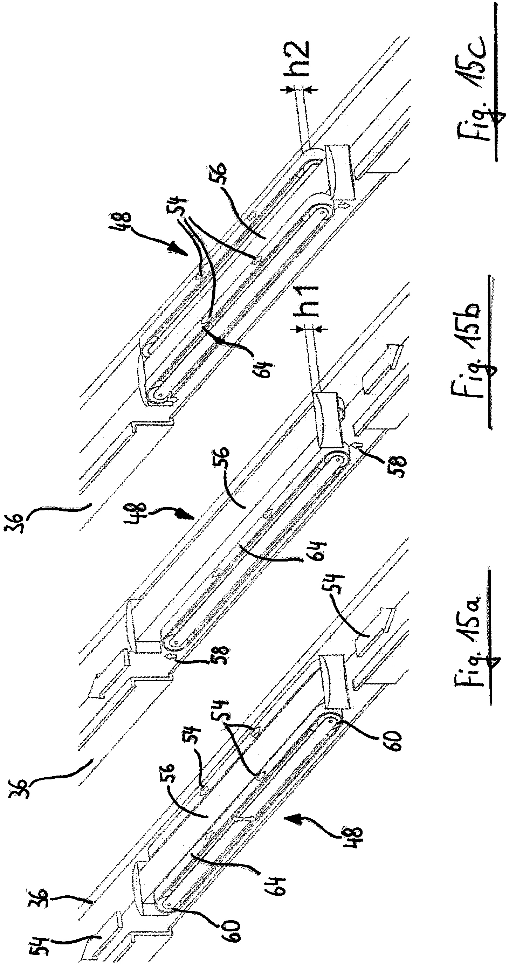

In den Figuren 15a bis 15c ist eine weitere Ausführungsform eines erfindungsgemäßen Lastaufnahmefahrzeugs 48 dargestellt. Dieses Lastaufnahmefahrzeug 48 ist insbesondere in Verbindung für Behälter und andere Einzelgebinde 62 vorteilhaft, kann aber auch im Zusammenhang mit Paletten 30, 32 problemlos verwendet werden. Analog zu den bisher beschriebenen Ausführungsformen des Lastaufnahmefahrzeugs 48 verfügt es über eine Antriebseinrichtung, die in diesem Beispiel in Form eines Riemenantrieb realisiert ist, ähnlich der Beschreibung im Zusammenhang mit Figur 8. Der Riemen 64 wird über Räder 60 zur Fortbewegung des Lastaufnahmefahrzeugs 48 verwendet, wie anhand der Pfeile 54 dargestellt. Damit ist ein Längsantrieb für das Lastaufnahmefahrzeug 48 bereitgestellt. In Figur 15a ist ein möglicher Verfahrzustand des Lastaufnahmefahrzeugs 48 dargestellt, bei dem der Lastaufnahmeabschnitt 56 in einer vom Untergrund etwas angehobenen Position, z.B. einer Mittelposition, angeordnet ist.

In Figur 15b ist der Lastaufnahmeabschnitt 56 durch die Hubeinrichtung entlang der Pfeile 58 angehoben, um beispielsweise Lagergut aus dem Regalsystem, das auf dem Kanalprofil 36 liegt, anzuheben. In dieser Position kann das Lastaufnahmefahrzeug 48 das Lagergut durch Antrieb des Riemens 64 längs des Kanalprofils durch den Lagerkanal 34 bewegen.

In Figur 15c ist eine Situation dargestellt, in der die Hubeinrichtung den Lastaufnahmeabschnitt 56 derart absenkt, bis beispielsweise der Rahmen 52 am Boden des Kanalprofils 36 aufsitzt und die Riemen 64 vom Boden des Kanalprofils 36 abgehoben werden. Wird die Hubeinrichtung um ein ausreichend großes Maß bewegt, so kommt die Oberseite des Riemens 64, die dann über den Lastaufnahmeabschnitt 56 hinausragt, mit dem Lagergut (z.B. Behälter) in Kontakt und hebt diesen an. Wird nun in diesem Zustand der Antriebsmechanismus aktiviert und die Riemen 64 entlang der Längsrichtung der Pfeile 54 bewegt, wird das Lastaufnahmefahrzeug 48 zur Fördereinrichtung.

Damit lassen sich gelagerte Gegenstände beispielsweise auf dem Shuttle 26 ohne Bewegen des Lastaufnahmefahrzeugs 48 verschieben, wie dies im Zusammenhang mit anderen Ausführungsformen der Erfindung durch eine separate Fördereinrichtung 78 erläutert ist. Dementsprechend ist das Lastaufnahmefahrzeug 48 gemäß der in Figur 15a-c dargestellten Ausführungsform von doppeltem Nutzen, da es sowohl zum Transport von Lagergut über relativ große Strecken aus dem Regalsystem durch die Kanalprofile verwendet werden kann und gleichzeitig als Fördereinrichtung zur Positionierung von Lagergut verwendbar ist, ohne dass sich das Lastaufnahmefahrzeug 48 dabei selbst bewegt.

Die vorliegende Erfindung enthält somit eine Vielzahl von Neuerungen, die eine weitgehend gemischte Lagerhaltung unabhängig davon, ob die gelagerten Gegenstände beispielsweise auf Paletten, in Behältern, auf Tableaus oder Ähnlichem gelagert werden, auf einfach Art und Weise ermöglicht, wobei voll automatisch auf die eingelagerten Gegenstände zugegriffen werden kann.

Die folgenden Aspekte sind bevorzugte Ausführungsformen der vorliegenden Erfindung.
1. Lager- und/oder Kommissioniersystem zum Lagern und/oder Kommissionieren von Gütern, mit:
   einem Regalsystem, das Regalreihen aufweist, die durch Längsgassen voneinander beabstandet und mittels mindestens einer Quergasse miteinander verbunden sind,
   mindestens einem Shuttle, das ausgebildet ist, sowohl in den Längs- als auch in den Quergassen des Regalsystems zu verfahren; und
   mindestens zwei Lastaufnahmefahrzeugen, die gleichzeitig auf dem Shuttle aufnehmbar sind.
2. Lager- und/oder Kommissioniersystem nach Aspekt 1, wobei das Regalsystem n-fach tief ist, wobei n gleich oder größer 1 und kleiner 50, vorzugsweise kleiner 15 ist.
3. Lager- und/oder Kommissioniersystem nach Aspekt 1 oder 2, wobei orthogonal durch die Regalreihen Lagerkanäle vorgesehen sind, wobei die Lagerkanäle durch Kanalprofile gebildet sind und sich von einer Längsgasse zu einer unmittelbar benachbarten Längsgasse erstrecken.
4. Lager- und/oder Kommissioniersystem nach Aspekt 3, wobei jeder Lagerkanal eine Stellplatzbreite, vorzugsweise mit einer Breite zwischen 1 und 1,5 m, definiert und pro Stellplatzbreite mindestens zwei und höchstens zehn parallel verlaufende Kanalprofile für jeweils mindestens ein Lastaufnahmefahrzeug vorgesehen sind.
5. Lager- und/oder Kommissioniersystem nach Aspekt 3 oder 4, wobei die Kanalprofile als Fahrspur für die Lastaufnahmefahrzeuge und gleichzeitig zum Halten des Lagerguts ausgebildet sind.
6. Lager- und/oder Kommissioniersystem nach einem der Aspekte 3 bis 5, wobei die Kanalprofile derart voneinander beabstandet sind, dass sie in die nach unten offenen Gabelfreiräume einer Palette passen.
7. Lager- und/oder Kommissioniersystem nach einem der Aspekte 1 bis 5, wobei das Shuttle einen Rahmen, ein Fahrgestell und einen Aufnahmebereich aufweist, wobei der Aufnahmebereich mindestens zwei Lastaufnahmefahrzeuge gleichzeitig aufnehmen kann.
8. Lager- und/oder Kommissioniersystem nach Aspekt 7, wobei der Aufnahmebereich mehrere parallel zueinander ausgerichtete Profilschienen aufweist und in jeder der Profilschienen mindestens ein Lastaufnahmefahrzeug aufnehmbar ist.
9. Lager- und/oder Kommissioniersystem nach Aspekt 7 oder 8, wobei zumindest zwei der Profilschienen derart voneinander beabstandet sind, dass sie in die nach unten offenen Gabelfreiräume einer Palette passen.
10. Lager- und/oder Kommissioniersystem nach einem der Aspekte 7 bis 9, wobei im Aufnahmebereich mindestens eine Einrichtung zum Fördern von Ladehilfsmitteln und/oder Ladung, insbesondere in Form von Rad-, Rollen-, Riemen- und/oder Kettenförderern, vorgesehen ist.
11. Lager- und/oder Kommissioniersystem nach einem der Aspekte 1 bis 10, wobei die Lastaufnahmefahrzeuge zum Verfahren in dem Regalsystem ausgebildet sind und mindestens eines der Lastaufnahmefahrzeuge aufweist:
   einen länglich ausgebildeten Rahmen mit einem daran angeordneten Fahrgestell und einer Antriebseinrichtung zum Verfahren des Lastaufnahmefahrzeugs in Längsrichtung;
   mindestens einen auf dem Rahmen angeordneten Lastaufnahmeabschnitt zur Aufnahme eines Ladehilfsmittels und/oder einer Ladung; und
   mindestens eine Hubeinrichtung zum Anheben und Absenken des Lastaufnahmeabschnitts;
   wobei das Lastaufnahmefahrzeug länglich ausgebildet und mindestens doppelt so lang wie breit ist.
12. Lager- und/oder Kommissioniersystem nach Aspekt 11, wobei mindestens zwei auf dem Rahmen angeordnete Lastaufnahmeabschnitte vorgesehen sind, die unabhängig voneinander mit jeweiligen Hubeinrichtungen anhebbar und absenkbar sind.
13. Lager- und/oder Kommissioniersystem nach Aspekt 11 oder 12, wobei ferner eine Kopplungseinrichtung zum Koppeln mehrerer Lastaufnahmefahrzeuge miteinander vorgesehen ist, wobei die Kopplung kommunikativ, nicht mechanisch erfolgt, wobei ein Lastaufnahmefahrzeug als Master fungiert und das/die andere(n) Lastaufnahmefahrzeug(e) als Slave fungiert/fungieren.
14. Lager- und/oder Kommissioniersystem nach Aspekt 13, wobei die Kopplungseinrichtung eingerichtet ist:
   (i) mindestens zwei längs zueinander ausgerichtete Lastaufnahmefahrzeuge miteinander zu koppeln, oder
   (ii) mindestens zwei in Querrichtung relative zueinander ausgerichtete Lastaufnahmefahrzeuge miteinander zu koppeln, oder
   (iii) mindestens zwei in Längsrichtung relative zueinander ausgerichtete Lastaufnahmefahrzeuge und mindestens zwei in Querrichtung relative zueinander ausgerichtete Lastaufnahmefahrzeuge miteinander zu koppeln.
15. Lager- und/oder Kommissioniersystem nach einem der Aspekte 11 bis 14, wobei die Antriebseinrichtung aufweist:
   (i) Räder, Rollen, Riemen und/oder Ketten, mit denen das Lastaufnahmefahrzeug verfahrbar ist; oder
   (ii) mindestens einen Motor, optional mit Getriebe; oder
   (iii) eine Steuerung zum autonomen Verfahren des Lastaufnahmefahrzeugs; oder
   (iv) einen Energiespeicher, vorzugsweise in Form eines Akkus, Kondensators, insbesondere Superkondensators; oder
   (v) jegliche Kombination aus (i) bis (iv).
16. Lager- und/oder Kommissioniersystem nach einem der Aspekte 11 bis 15, wobei das Lastaufnahmefahrzeug ferner eine Einrichtung zum Fördern des Ladehilfsmittels und/oder der Ladung in Längsrichtung, insbesondere einen oder mehrere Rad-, Rollen-, Riemen- und/oder Kettenförderer, aufweist.
17. Lager- und/oder Kommissioniersystem nach Aspekt 16, wobei die Einrichtung zum Fördern durch die Antriebseinrichtung, vorzugsweise die Räder, Rollen, Riemen und/oder Ketten, bereitgestellt ist, indem sie mit dem Ladehilfsmittel und/oder der Ladung direkt in Kontakt bringbar ist.
18. Lager- und/oder Kommissioniersystem nach einem der Aspekte 11 bis 17, wobei bei eingefahrener Hubeinrichtung die Höhe des Lastaufnahmefahrzeugs maximal 150 mm, vorzugsweise maximal 100 mm beträgt.
19. Lager- und/oder Kommissioniersystem nach einem der Aspekte 1 bis 18, wobei das mindestens eine Shuttle mit den mindestens zwei Lastaufnahmefahrzeugen derart gesteuert werden, dass das Transportieren von Lagergütern mit den Lastaufnahmefahrzeugen aus mehreren verschiedenen Regalkanälen zeitgleich mit dem Verfahren des/der Shuttle erfolgt.
20. Lager- und/oder Kommissioniersystem nach einem der Aspekte 1 bis 19, wobei das mindestens eine Shuttle und/oder die ,mindestens zwei Lastaufnahmefahrzeuge derart ausgebildet sind, dass sie sowohl Palletten als auch Einzelgebinde aufnehmen und transportieren können.
21. Lager- und/oder Kommissioniersystem nach einem der Aspekte 1 bis 20, ferner mit einer Basisstation zur Aufnahme der mindestens zwei Lastaufnahmefahrzeuge.
22. Lager- und/oder Kommissioniersystem nach Aspekt 21, wobei die Basisstation zur Anbringung an einem Regalfahrzeug ausgebildet ist.
23. Shuttle für ein Regalsystem mit einem Rahmen, einem Fahrgestell und einem Aufnahmebereich, wobei das Shuttle ausgebildet ist, sowohl in Längs- als auch in Quergassen des Regalsystems zu verfahren, und wobei der Aufnahmebereich mindestens zwei Lastaufnahmefahrzeuge gleichzeitig aufnehmen kann.
24. Shuttle nach Aspekt 23, wobei der Aufnahmebereich mehrere parallel zueinander ausgerichtete Profilschienen aufweist und in jeder der Profilschienen mindestens ein Lastaufnahmefahrzeug aufnehmbar ist.
25. Shuttle nach Aspekt 23 oder 24, wobei zumindest zwei der Profilschienen derart voneinander beabstandet sind, dass sie in die nach unten offenen Gabelfreiräume einer Palette passen.
26. Shuttle nach einem der Aspekte 13 bis 25, wobei im Aufnahmebereich mindestens eine Einrichtung zum Fördern von Ladehilfsmitteln und/oder Ladung, insbesondere in Form von Rad-, Rollen-, Riemen- und/oder Kettenförderern, vorgesehen ist.
27. Shuttle nach einem der Aspekte 23 bis 26 wobei die Lastaufnahmefahrzeuge zum Verfahren in dem Regalsystem ausgebildet sind und mindestens eines der Lastaufnahmefahrzeuge aufweist:
   einen länglich ausgebildeten Rahmen mit einem daran angeordneten Fahrgestell und einer Antriebseinrichtung zum Verfahren des Lastaufnahmefahrzeugs in Längsrichtung;
   mindestens einen auf dem Rahmen angeordneten Lastaufnahmeabschnitt zur Aufnahme eines Ladehilfsmittels und/oder einer Ladung; und
   mindestens eine Hubeinrichtung zum Anheben und Absenken des Lastaufnahmeabschnitts;
   wobei das Lastaufnahmefahrzeug länglich ausgebildet und mindestens doppelt so lang wie breit ist.
28. Shuttle nach Aspekt 27, wobei mindestens zwei auf dem Rahmen angeordnete Lastaufnahmeabschnitte vorgesehen sind, die unabhängig voneinander mit jeweiligen Hubeinrichtungen anhebbar und absenkbar sind.
29. Shuttle nach Aspekt 27 oder 28, wobei ferner eine Kopplungseinrichtung zum Koppeln mehrerer Lastaufnahmefahrzeuge miteinander vorgesehen ist, wobei die Kopplung kommunikativ, nicht mechanisch erfolgt, wobei ein Lastaufnahmefahrzeug als Master fungiert und das/die andere(n) Lastaufnahmefahrzeug(e) als Slave fungiert/fungieren.
30. Shuttle nach Aspekt 29, wobei die Kopplungseinrichtung eingerichtet ist:
   (i) mindestens zwei längs zueinander ausgerichtete Lastaufnahmefahrzeuge miteinander zu koppeln, oder
   (ii) mindestens zwei in Querrichtung relative zueinander ausgerichtete Lastaufnahmefahrzeuge miteinander zu koppeln, oder
   (iii) mindestens zwei in Längsrichtung relative zueinander ausgerichtete Lastaufnahmefahrzeuge und mindestens zwei in Querrichtung relative zueinander ausgerichtete Lastaufnahmefahrzeuge miteinander zu koppeln.
31. Shuttle nach einem der Aspekte 27 bis 30, wobei die Antriebseinrichtung aufweist:
   (i) Räder, Rollen, Riemen und/oder Ketten, mit denen das Lastaufnahmefahrzeug verfahrbar ist; oder
   (ii) mindestens einen Motor, optional mit Getriebe; oder
   (iii) eine Steuerung zum autonomen Verfahren des Lastaufnahmefahrzeugs; oder
   (iv) einen Energiespeicher, vorzugsweise in Form eines Akkus, Kondensators, insbesondere Superkondensators; oder
   (v) jegliche Kombination aus (i) bis (iv).
32. Shuttle nach einem der Aspekte 27 bis 31, wobei das Lastaufnahmefahrzeug ferner eine Einrichtung zum Fördern des Ladehilfsmittels und/oder der Ladung in Längsrichtung, insbesondere einen oder mehrere Rad-, Rollen-, Riemen- und/oder Kettenförderer, aufweist.
33. Shuttle nach Aspekt 32, wobei die Einrichtung zum Fördern durch die Antriebseinrichtung, vorzugsweise die Räder, Rollen, Riemen und/oder Ketten, bereitgestellt ist, indem sie mit dem Ladehilfsmittel und/oder der Ladung direkt in Kontakt bringbar ist.
34. Shuttle nach einem der Aspekte 27 bis 33, wobei bei eingefahrener Hubeinrichtung die Höhe des Lastaufnahmefahrzeugs maximal 150 mm, vorzugsweise maximal 100 mm beträgt.
35. Lastaufnahmefahrzeug, insbesondere zur Mitführung auf einem Shuttle eines Regalsystems und zum Verfahren in dem Regalsystem, wobei das Lastaufnahmefahrzeug aufweist:
   einen länglich ausgebildeten Rahmen mit einem daran angeordneten Fahrgestell und einer Antriebseinrichtung zum Verfahren des Lastaufnahmefahrzeugs in Längsrichtung;
   mindestens einen auf dem Rahmen angeordneten Lastaufnahmeabschnitt zur Aufnahme eines Ladehilfsmittels und/oder einer Ladung; und
   mindestens eine Hubeinrichtung zum Anheben und Absenken des Lastaufnahmeabschnitts;
   wobei das Lastaufnahmefahrzeug länglich ausgebildet und mindestens doppelt so lang wie breit ist.
36. Lastaufnahmefahrzeug nach Aspekt 35, wobei mindestens zwei auf dem Rahmen angeordnete Lastaufnahmeabschnitte vorgesehen sind, die unabhängig voneinander mit jeweiligen Hubeinrichtungen anhebbar und absenkbar sind.
37. Lastaufnahmefahrzeug nach Aspekt 35 oder 36, wobei ferner eine Kopplungseinrichtung zum Koppeln mehrerer Lastaufnahmefahrzeuge miteinander vorgesehen ist, wobei die Kopplung kommunikativ, nicht mechanisch erfolgt, wobei ein Lastaufnahmefahrzeug als Master fungiert und das/die andere(n) Lastaufnahmefahrzeug(e) als Slave fungiert/fungieren.
38. Lastaufnahmefahrzeug nach Aspekt 37, wobei die Kopplungseinrichtung eingerichtet ist:
   (i) mindestens zwei längs zueinander ausgerichtete Lastaufnahmefahrzeuge miteinander zu koppeln, oder
   (ii) mindestens zwei in Querrichtung relative zueinander ausgerichtete Lastaufnahmefahrzeuge miteinander zu koppeln, oder
   (iii) mindestens zwei in Längsrichtung relative zueinander ausgerichtete Lastaufnahmefahrzeuge und mindestens zwei in Querrichtung relative zueinander ausgerichtete Lastaufnahmefahrzeuge miteinander zu koppeln.
39. Lastaufnahmefahrzeug nach einem der Aspekte 35 bis 39, wobei die Antriebseinrichtung aufweist:
   (i) Räder, Rollen, Riemen und/oder Ketten, mit denen das Lastaufnahmefahrzeug verfahrbar ist; oder
   (ii) mindestens einen Motor, optional mit Getriebe; oder
   (iii) eine Steuerung zum autonomen Verfahren des Lastaufnahmefahrzeugs; oder
   (iv) einen Energiespeicher, vorzugsweise in Form eines Akkus, Kondensators, insbesondere Superkondensators; oder
   (v) jegliche Kombination aus (i) bis (iv).
40. Lastaufnahmefahrzeug nach einem der Aspekte 35 bis 39, der eine Einrichtung zum Fördern des Ladehilfsmittels und/oder der Ladung in Längsrichtung, insbesondere einen oder mehrere Rad-, Rollen-, Riemen- und/oder Kettenförderer, aufweist.
41. Lastaufnahmefahrzeug nach Aspekt 40, wobei die Einrichtung zum Fördern durch die Antriebseinrichtung, vorzugsweise die Räder, Rollen, Riemen und/oder Ketten, bereitgestellt ist, indem sie mit dem Ladehilfsmittel und/oder der Ladung direkt in Kontakt bringbar ist.
42. Lastaufnahmefahrzeug nach einem der Aspekte 35 bis 41, wobei bei eingefahrener Hubeinrichtung die Höhe des Lastaufnahmefahrzeugs maximal 150 mm, vorzugsweise maximal 100 mm beträgt.

## Patentansprüche

1. Lastaufnahmefahrzeugverbund mit mindestens zwei Lastaufnahmefahrzeugen (48), wobei die mindestens zwei Lastaufnahmefahrzeuge (48) jeweils aufweisen:
einen länglich ausgebildeten Rahmen (52) mit einem daran angeordneten Fahrgestell und einer Antriebseinrichtung zum Verfahren des Lastaufnahmefahrzeugs (48) in Längsrichtung,
mindestens einen auf dem Rahmen (52) angeordneten Lastaufnahmeabschnitt (56) zur Aufnahme eines Ladehilfsmittels und/oder einer Ladung;
mindestens eine Hubeinrichtung zum Anheben und Absenken des Lastaufnahmeabschnitts; und
Mittel (76) zum Koppeln der mindestens zwei Lastaufnahmefahrzeuge (48) miteinander;
wobei die mindestens zwei Lastaufnahmefahrzeuge (48) länglich ausgebildet und mindestens doppelt so lang wie breit sind, wobei die mindestens zwei Lastaufnahmefahrzeuge (48) so bemessen sind, dass sie in die Gabelfreiräume von Euro-Paletten (30) und/oder Düsseldorfer Paletten (32) einfahren können, und wobei die mindestens zwei Lastaufnahmefahrzeuge (48) ausgebildet sind, im Verbund in Kanalprofilen als Fahrspur zu verfahren.

2. Lastaufnahmefahrzeugverbund nach Anspruch 1, wobei mindestens zwei auf dem Rahmen angeordnete Lastaufnahmeabschnitte (56) vorgesehen sind, die unabhängig voneinander mit jeweiligen Hubeinrichtungen anhebbar und absenkbar sind.

3. Lastaufnahmefahrzeugverbund nach Anspruch 1 oder 2, wobei die Mittel (76) zum Koppeln eine Kopplungseinrichtung aufweist, wobei die Kopplung kommunikativ, nicht mechanisch erfolgt, wobei ein Lastaufnahmefahrzeug (48) als Master fungiert und das/die andere(n) Lastaufnahmefahrzeug(e) (48) als Slave fungiert/fungieren.

4. Lastaufnahmefahrzeugverbund nach Anspruch 3, wobei die Kopplungseinrichtung (76) eingerichtet ist:
(i) mindestens zwei längs zueinander ausgerichtete Lastaufnahmefahrzeuge (48) miteinander zu koppeln, oder
(ii) mindestens zwei in Querrichtung relative zueinander ausgerichtete Lastaufnahmefahrzeuge (48) miteinander zu koppeln, oder
(iii) mindestens zwei in Längsrichtung relative zueinander ausgerichtete Lastaufnahmefahrzeuge (48) und mindestens zwei in Querrichtung relative zueinander ausgerichtete Lastaufnahmefahrzeuge (48) miteinander zu koppeln.

5. Lastaufnahmefahrzeugverbund nach einem der Ansprüche 1 bis 4, wobei die Antriebseinrichtung Räder (60), Rollen, Riemen (64) und/oder Ketten, mit denen das Lastaufnahmefahrzeug (48) verfahrbar ist, und mindestens einen Motor (68), optional mit Getriebe (70), aufweist.

6. Lastaufnahmefahrzeugverbund nach einem der Ansprüche 1 bis 5, wobei die Antriebseinrichtung eine Steuerung zum autonomen Verfahren des Lastaufnahmefahrzeugs (48) aufweist.

7. Lastaufnahmefahrzeugverbund nach einem der Ansprüche 1 bis 6, wobei die Antriebseinrichtung einen Energiespeicher, vorzugsweise in Form eines Akkus, Kondensators, insbesondere Superkondensators, aufweist.

8. Lastaufnahmefahrzeugverbund nach einem der Ansprüche 1 bis 7, wobei die mindestens zwei Lastaufnahmefahrzeuge (48) jeweils eine Einrichtung zum Fördern des Ladehilfsmittels und/oder der Ladung in Längsrichtung, insbesondere einen oder mehrere Rad-, Rollen-, Riemen- und/oder Kettenförderer, aufweist.

9. Lastaufnahmefahrzeugverbund nach Anspruch 8, wobei die Einrichtung zum Fördern durch die Antriebseinrichtung, vorzugsweise die Räder, Rollen, Riemen und/oder Ketten, bereitgestellt ist, indem sie mit dem Ladehilfsmittel und/oder der Ladung direkt in Kontakt bringbar ist.

10. Lastaufnahmefahrzeugverbund nach einem der Ansprüche 1 bis 9, wobei bei eingefahrener Hubeinrichtung die Höhe des Lastaufnahmefahrzeugs (48) maximal 150 mm, vorzugsweise maximal 100 mm beträgt.

11. Lastaufnahmefahrzeugverbund nach einem der Ansprüche 1 bis 10, wobei in einem vorderen und hinteren Endbereich des Lastaufnahmefahrzeugs (48) Sensoren (74) zur Positionierung und Fahrwegkontrolle vorgesehen sind.

12. Lastaufnahmefahrzeugverbund nach einem der Ansprüche 1 bis 11, wobei das Lastaufnahmefahrzeug (48) zwischen 500 und 1300 mm lang, insbesondere zwischen 600 und 700 mm, und 70 bis 180 mm, vorzugsweise 75 bis 85 mm breit ist.

13. Basisstation mit mindestens einem darin angeordneten Lastaufnahmefahrzeugverbund nach einem der Ansprüche 1 bis 12, wobei die Basisstation stationär oder mobil in einem Regalsystem vorgesehen ist.

14. Basisstation nach Anspruch 13, die mobil ausgestaltet ist und an einem Regalfahrzeug, insbesondere einem Regalbediengerät, angebracht ist, so dass damit mehrere Lastaufnahmefahrzeuge (48) verfahren werden können.

15. Basisstation nach Anspruch 13 oder 14, die derart beschaffen ist, dass die Lastaufnahmefahrzeuge (48) darin aufgeladen und/oder Daten übermittelt werden.

16. Regalsystem mit Basisstation nach einem der Ansprüche 13 bis 15.
